Europäisches Patentamt

European Patent Office

Office européen des brevets

(19)

(11) Numéro de publication : **0 009 758**
**B1**

(12) **FASCICULE DE BREVET EUROPÉEN**

(45) Date de publication du fascicule du brevet :
24.02.82

(51) Int. Cl.³ : **F 16 H   5/64**

(21) Numéro de dépôt : 79103643.7

(22) Date de dépôt : 25.09.79

(54) **Dispositif de commande d'une transmission automatique et procédé de mise en œuvre.**

(30) Priorité : 04.10.78 FR 7828437

(43) Date de publication de la demande :
16.04.80 (Bulletin 80/08)

(45) Mention de la délivrance du brevet :
24.02.82 Bulletin 82/08

(84) Etats contractants désignés :
**BE DE GB IT NL SE**

(56) Documents cités :
FR- A - 2 - 248 443
GB - A - 1 - 361 220
GB - A - 1 437 942
US - A - 3 738 199

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Aubert, Paul**
**71, rue du Pavé Blanc**
**F-92120 Clamart (FR)**
Inventeur : **Quinton, Christian**
**47, Boulevard de Solférino**
**F-92500 Rueil-Malmaison (FR)**

(74) Mandataire : **Casalonga, Alain et al**
**Bureau D.A. Casalonga Lilienstrasse 77**
**D-8000 München 80 (DE)**

Imprimerie Jouve, 18, rue St-Denis, 75001 Paris, France

## Dispositif de commande d'une transmission automatique et procédé de mise en œuvre

La présente invention est relative à un dispositif de commande d'une transmission automatique étagée à trois rapports de marche avant, à passage sous couple amorti par un convertisseur hydrocinétique de couple et un rapport de marche arrière.

On connaît déjà des transmissions automatiques de ce type pour véhicules automobiles qui comprennent principalement un convertisseur hydrocinétique de couple et une boîte de vitesses à train épicycloïdal ainsi qu'un ensemble de dispositifs de commande hydrauliques et éventuellement électroniques qui tiennent compte, pour la commande des différents organes de la boîte de vitesses, d'informations concernant la marche du véhicule, telles qu'en particulier, sa vitesse ainsi que la charge du moteur ou, ce qui revient au même, la position de la pédale d'accélérateur.

L'association d'un convertisseur de couple et d'un train épicycloïdal permet d'obtenir une variation continue du couple appliqué aux roues du véhicule lors des démarrages et des accélérations. De plus, on obtient des changements de rapport qui peuvent être effectués rapidement sous couple et qui sont amortis par le convertisseur hydrocinétique conférant ainsi à la transmission une grande souplesse d'utilisation.

Le train d'engrenages épicycloïdal est piloté par un certain nombre de récepteurs hydrauliques. Dans le cas d'une transmission à trois rapports de marche avant et une marche arrière, on peut ainsi utiliser deux embrayages et deux freins à commande hydraulique. Le passage d'un rapport à l'autre se fait par serrage ou desserrage de l'un de ces récepteurs et desserrage ou serrage d'un autre récepteur. Il est nécessaire de prévoir une période transitoire en particulier au passage du troisième au deuxième rapport de marche avant et vice versa afin de permettre au moteur d'entraînement du véhicule d'adapter sa vitesse au nouveau rapport de transmission.

Dans le brevet français 1.528.877 on a déjà décrit un dispositif hydraulique de commande d'une telle transmission automatique dans laquelle le train d'engrenages épicycloïdal est actionné au moyen de deux embrayages et de deux freins à commande hydraulique, le train épicycloïdal comportant en outre un dispositif de roue libre. Le dispositif de commande hydraulique comporte principalement un distributeur hydraulique qui peut prendre trois positions correspondant aux trois rapports de marche avant et qui est piloté par deux électrovannes afin d'alimenter sélectivement les deux embrayages et les deux freins précités pour définir les trois rapports de marche avant de la transmission. Une vanne hydraulique dite vanne relais est de plus interposée dans le circuit hydraulique entre le distributeur hydraulique et les récepteurs constitués par les embrayages et les freins précités. Cette vanne relais permet de créer entre la deuxième et la troisième vitesse le recouvrement nécessaire pour obtenir un passage troisième-deuxième ou inversement sans rupture de la liaison mécanique entre les arbres d'entrée et de sortie de la boîte de vitesses, sans emballement du moteur et sans à-coup pour le conducteur du véhicule. La durée de ce recouvrement est définie par des moyens hydrauliques.

Le brevet français 2.313.608 décrit un autre mode de réalisation mettant en œuvre des moyens de temporisation hydrauliques agissant au passage du troisième au deuxième rapport et vice versa.

Ces temporisations hydrauliques qui dépendent soit du temps de remplissage de l'un des récepteurs soit du temps de déplacement de tiroirs de vannes hydrauliques ne peut cependant être déterminé que de manière approximative et sans tenir compte de tous les paramètres concernant la marche du véhicule.

La présente invention a pour objet un dispositif de commande d'une telle transmission automatique qui assure un passage de transmission entre le troisième et le deuxième rapport de marche avant sans aucun à-coup. Le dispositif de l'invention permet de séparer la fonction de commande des différents éléments de la transmission automatique et la fonction de temporisation nécessaire pour la détermination de la durée de l'état transitoire entre ces deux rapports de vitesses de la transmission. Il est alors possible de confier la fonction de temporisation à des moyens spécialement adaptés à une telle fonction et en particulier de préférence à des moyens électroniques.

Le dispositif de l'invention est particulièrement adapté à la commande d'une transmission automatique étagée à trois rapports de marche avant à passage sous couple, amorti par un convertisseur hydrocinétique de couple et un rapport de marche arrière, pour véhicule automobile. La transmission automatique est de préférence du type comportant un train d'engrenages épicycloïdal actionné par deux embrayages et deux freins à commande hydraulique. Le dispositif de l'invention comprend un distributeur hydraulique piloté par deux électrovannes afin d'alimenter sélectivement les deux embrayages et les deux freins du train épicycloïdal. Les deux électrovannes sont excitées en fonction d'informations concernant la marche du véhicule équipé de la transmission. Ces informations peuvent en particulier être la vitesse du véhicule ainsi que la charge du moteur d'entraînement du véhicule ou, ce qui revient au même, la position de la pédale d'accélérateur. Selon l'invention les moyens de commande des deux électrovannes sont agencés de façon à utiliser, en plus de trois états différents des deux électrovannes pour une alimentation sélective correspondant respectivement à chacun des trois rapports de marche avant, un quatrième état possible pour la transition entre le troisième et le deuxième rapport de marche avant. De cette manière il est possible, par le biais de ce quatrième état des deux électrovannes, de placer la transmission dans un état transitoire assurant le passage du troisième ou deuxième rapport sans aucune rupture de liaison mécanique entre les arbres d'entrée et de sortie, en supprimant ainsi tout à-coup pour le conducteur du véhicule.

Dans un mode de réalisation préféré, le dispositif de commande comprend deux vannes de passage munies chacune d'un tiroir de distribution qui peut prendre uniquement deux positions sous l'action de l'électrovanne qui lui est associée.

Le dispositif de l'invention comporte en outre des moyens pour déterminer la durée du maintien du quatrième état transitoire en fonction d'informations concernant la marche du véhicule équipé de la transmission et en particulier en fonction de la vitesse du véhicule et de la charge du moteur d'entraînement. Ces moyens sont de préférence constitués par un ensemble électronique délivrant aux deux électrovannes des signaux de commande susceptibles en particulier de maintenir l'état transitoire précité pendant une durée variable en fonction des différents paramètres précités concernant la marche du véhicule. Bien entendu il serait possible de concevoir d'autres moyens tels que des moyens hydrauliques pour la détermination de la durée du maintien de ce quatrème état transitoire. Les moyens électroniques permettent cependant de tenir compte le plus facilement des paramètres concernant la marche du véhicule.

Le dispositif de commande de l'invention comporte de préférence une vanne relais à deux tiroirs pouvant définir trois états selon leurs positions respectives. La vanne relais peut alimenter respectivement l'un es embrayages et les deux freins à commande hydraulique actionnant le train épicycloïdal. Les deux vannes de passage précitées sont reliées entre elles et aux entrées de la vanne relais de façon que dans le quatième état transitoire des deux électrovannes, le remplissage de l'un des freins, utilisé pour le deuxième rapport de la transmission, se fasse à travers la vanne relais à grande vitesse par un conduit d'alimentation rapide muni d'une restriction à grand passage et que, dans un autre état des deux électrovannes correspondant au régime permanent du deuxième rapport de marche avant, le remplissage du frein précité se fasse à travers la vanne relais à faible vitesse par un conduit d'alimentation lent muni d'une restriction à faible passage.

Le passage du troisième rapport de marche avant dans lequel les deux embrayages sont fermés et aucun frein n'est actionné au deuxième rapport de la transmission où seul l'un des embrayages et l'un des freins se trouvent bloqués se fait selon l'invention par l'intermédiaire d'un état transitoire au cours duquel l'un des embrayages utilisé pour le troisième rapport se vidange pendant que le frein nécessaire pour l'établissement du deuxième rapport se remplit. Grâce à l'existence de l'état transitoire il est possible de faire varier la durée totale du remplissage de ce frein hydraulique en faisant varier comme il a été dit le débit d'alimentation en fluide hydraulique pour ce frein lors du passage du troisième au deuxième rapport. En faisant varier la durée du quatrième état transitoire de la présente invention il est donc possible de tenir compte, pour le temps de passage du troisième au deuxième rapport des conditions de marche du véhicule et en particulier de sa vitesse et de la position de la pédale d'accélérateur de façon à permettre au moteur du véhicule d'atteindre la vitesse de synchronisme nécessaire pour l'établissement du deuxième rapport de la transmission.

La vanne relais comprend de préférence deux tiroirs de distribution séparés par une chambre intermédiaire et soumis à l'action d'un ressort de rappel tendant à repousser les deux tiroirs dans un sens avec une force légèrement supérieure au frottement des tiroirs dans le corps de la vanne. La vanne relais comprend en outre une chambre d'extrémité en communication avec l'un des embrayages qui doit être fermé pour le troisième rapport et ouvert pour le deuxième. Cette chambre d'extrémité est susceptible de provoquer le déplacement de l'un des tiroirs de ladite vanne ou tiroir de coupure à l'encontre de la pression régnant dans la chambre intermédiaire depuis une position où le deuxième frein, qui est bloqué pour le deuxième rapport, est alimenté par l'intermédiaire de la vanne relais jusqu'à une position où ledit frein n'est pas alimenté.

De cette manière, il est possible en alimentant la chambre intermédiaire de la vanne relais à une pression de consigne intermédiaire de couper ou d'alimenter le frein utilisé pour le deuxième rapport en fonction de la variation de la pression du fluide hydraulique régnant dans l'embrayage utilisé pour le troisième rapport. La pression de consigne régnant dans la chambre intermédiaire lorsque les deux vannes de passage sont ouvertes est avantageusement définie par la pression intermédiaire régnant entre deux restrictions en série disposées dans un conduit à la pression de ligne.

Lorsque les deux tiroirs de la vanne relais ont été repoussés à l'encontre du ressort de rappel sous l'action de la pression régnant dans la chambre d'extrémité en communication avec l'embrayage précité, la vanne relais permet l'alimentation d'un autre frein ou frein de marche arrière. Une restriction est de plus disposée entre ledit embrayage et la chambre d'extrémité de la vanne relais afin que, dans cette position de ladite vanne, le frein de marche arrière soit rempli avant ledit embrayage de façon à éviter le choc dû au passage de la marche arrière.

La pression du fluide hydraulique alimentant le dispositif de commande est de préférence définie à l'aide d'une vanne de régulation de pression qui est capable de déterminer un premier niveau de pression ou niveau haut pour la marche arrière et la position neutre de la transmission, un deuxième niveau de pression ou niveau intermédiaire défini entre deux restrictions en série pour le premier rapport de marche avant et un troisième niveau de pression ou niveau bas pour les deuxième et troisième rapports de marche avant. Un capteur de dépression à membrane peut avantageusement être associé à la vanne de régulation de pression de façon à tenir compte, pour l'établissement du niveau de pression du fluide hydraulique, de la dépression régnant en aval du volet du carburateur du moteur d'entraînement du véhicule. De cette manière il est possible de faire évoluer la pression du fluide hydraulique en fonction des besoins des embrayages et des freins et en tenant compte de la variation du couple transmis selon la position de la pédale d'accélérateur.

Le dispositif de commande compred en outre une vanne manuelle classique permettant l'alimentation du dispositif en fluide hydraulique ainsi que l'alimentation directe du premier embrayage de la transmission ou embrayage de marche avant. La vanne manuelle est actionnée par un levier de commande ou levier de sélection qui permet au conducteur d'utiliser les diverses possibilités de la boîte de vitesses automatique.

Lorsque la première vanne de passage est ouverte et la deuxième vanne de passage fermée, la vanne relais ne peut être alimentée en fluide hydraulique que par la vanne manuelle. Lorsque cette dernière n'alimente pas non plus la vanne relais les deux freins et l'embrayage utilisés pour le troisième rapport de la boîte de vitesses sont vidangés, les tiroirs de la vanne relais étant repoussés par son ressort de rappel. Dans cette position, la vanne manuelle peut alimenter le premier embrayage ou embrayage de marche avant auquel cas on se trouve dans une configuration correspondant au premier rapport de vitesse. Dans ce cas, les deux vannes de passage laissent passer un débit de fuite en aval des deux restrictions en série précitées, la vanne de régulation de pression établissant ainsi la pression de ligne au niveau intermédiaire.

Lorsque les deux vannes de passage sont fermées, la vanne manuelle étant placée de façon à alimenter le premier embrayage ou embrayage de marche avant, le fluide hydraulique à la pression de ligne établie par la vanne de régulation de pression au niveau bas, alimente la chambre intermédiaire de la vanne relais et, de ce fait le deuxième frein, ce qui correspond au deuxième rapport de la transmission.

Lorsque les deux vannes de passage sont ouvertes, la vanne manuelle étant placée de façon à alimenter le premier embrayage ou embrayage de marche avant, la première vanne de passage laisse passer un débit de fuite en aval des deux restrictions précitées alimentant la chambre intermédiaire de la vanne relais à la pression de consigne. Le deuxième embrayage se trouve alimenté à la pression de ligne à travers une restriction par l'intermédiaire des deux vannes de passage et la chambre d'extrémité de la vanne relais est soumise à la pression régnant dans ce deuxième embrayage. On se trouve alors dans une configuration correspondant au troisième rapport de la transmission.

L'invention sera mieux comprise à l'étude d'un mode de réalisation particulier décrit à titre nullement limitatif et illustré par les dessins annexés, sur lesquels :

la fig. 1. représente schématiquement les principaux éléments d'une transmission automatique que le dispositif de l'invention est destiné à commander ;

la fig. 2 illustre le bloc schéma du dispositif de commande de l'invention ;

la fig. 3 montre un tableau des états des différents organes du dispositif de commande et de la transmission selon la position du levier de sélection et le rapport engagé ;

la fig. 4 représente schématiquement le circuit hydraulique du dispositif montrant en outre les différents conduits alimentés en fluide hydraulique pour la configuration de la transmission correspondant au point mort ;

la fig. 5 est analogue à la fig. 4 pour la configuration de la transmission correspondant au rapport de marche arrière ;

la fig. 6 est analogue à la fig. 4 pour la configuration de la transmission correspondant au premier rapport de marche avant ;

la fig. 7 est analogue à la fig. 4 pour la configuration de la transmission correspondant à l'état permanent du deuxième rapport de la transmission ;

la fig. 8 est analogue à la fig. 4 et illustre l'état de la transmission correspondant au passage transitoire du deuxième au troisième rapport ;

la fig. 9 est analogue à la fig. 4 et illustre l'état de la transmission correspondant à la deuxième phase du passage transitoire entre le deuxième et le troisième rapport ;

la fig. 10 est analogue à la fig. 4 et illustre l'état de la transmission correspondant au troisième rapport ;

la fig. 11 est analogue à la fig. 4 et illustre l'état de la transmission correspondant à la première vitesse imposée par le conducteur ;

la fig. 12 est une courbe montrant la durée de la temporisation en fonction de la vitesse du véhicule ; et

la fig. 13 illustre la variation de la pression dans le frein utilisé pour le deuxième rapport en fonction du temps.

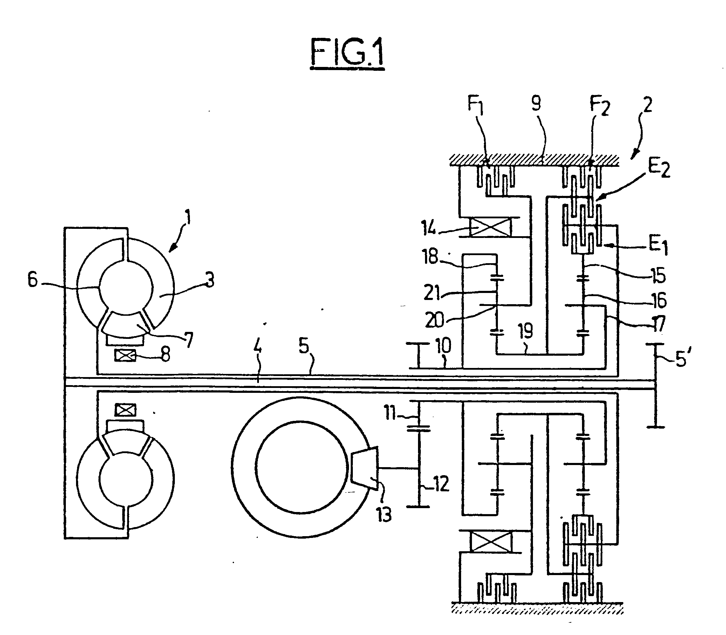

Dans l'exemple non limitatif qui va faire l'objet d'une description détaillée, la transmission automatique est telle que représentée sur la fig. 1. La transmission comprend un convertisseur hydrocinétique de couple 1 et une boîte de vitesses à train épicycloïdal 2. Le convertisseur de couple comprend de manière classique trois éléments : l'impulseur ou pompe 3 relié au moteur d'entraînement du véhicule non représenté sur la figure et entraînant la pompe de servitude 5' de la boîte de vitesses par l'intermédiaire d'un arbre 4 qui traverse la boîte de vitesses 2 ; une turbine 6 dont l'arbre 5 constitue l'arbre d'entrée de la boîte de vitesses 2 ; et un réacteur 7 monté par l'intermédiaire d'un dispositif de roue libre 8.

Le train d'engrenage épicycloïdal 2 est logé

dans le carter 9 du mécanisme. Il reçoit le couple du convertisseur 1 par l'intermédiaire de l'arbre d'entrée 5 et le transmet par l'intermédiaire de l'arbre de sortie 10 et de deux pignons de descente 11 et 12 au couple conique 13 qui transmet le couple aux roues du véhicule par l'intermédiaire d'un différentiel classique.

Les différents rapports de transmission sont obtenus au moyen d'un premier embrayage E1, un deuxième embrayage E2, un premier frein F1, un deuxième frein F2 et un dispositif de roue libre 14. Les deux embrayages et les deux freins peuvent être commandés hydrauliquement de manière classique. Dans la pratique on pourra utiliser des embrayages multidisques soumis à l'action d'un piston recevant la pression d'huile d'un fluide hydraulique.

Le premier embrayage ou embrayage de marche avant E1 transmet le couple de l'arbre 5 de la turbine 6 du convertisseur 1, ou arbre d'entrée, à une première couronne dentée 15 qui se trouve en prise avec un premier jeu de pignons satellites 16 montés sur un premier boîtier porte-satellite 17. Le premier porte-satellite 17 est relié mécaniquement à une deuxième couronne dentée 18 et à l'arbre de sortie 10. Le deuxième embrayage E2 transmet par l'intermédiaire de la cloche de liaison du premier embrayage E1 le couple de l'arbre d'entrée 5 à un planétaire double 19. Le premier frein F1 est susceptible de bloquer un deuxième boîtier porte-satellite 20 supportant un deuxième jeu de pignons satellites 21 en prise avec la deuxième couronne dentée 18. Le dispositif de roue libre 14 est susceptible de bloquer dans un seul sens de rotation le deuxième boîtier porte-satellite 20 par rapport au carter 9. Le deuxième frein F2 est susceptible de bloquer le planétaire 19 par rapport au carter 9.

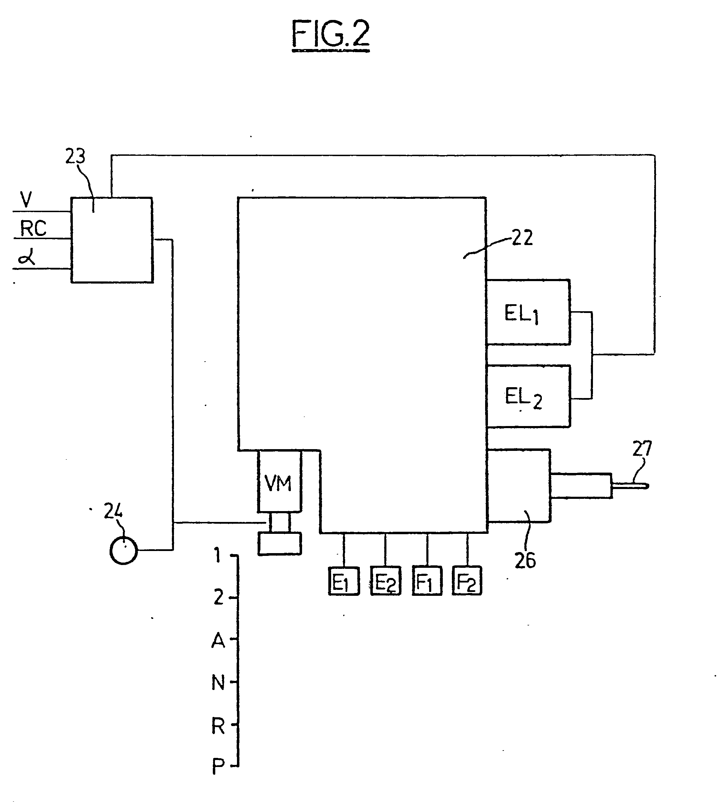

Les différentes combinaisons d'actionnement de ces éléments de commande permettent, compte tenu de l'existence supplémentaire du dispositif de roue libre 14, d'obtenir les trois rapports de marche avant et le rapport de marche arrière de la transmission. Les principaux éléments du dispositif de commande de l'invention sont représentés schématiquement sur la fig. 2. On voit sur cette figure que le dispositif comprend un ensemble distributeur hydraulique 22 qui alimente sélectivement à sa sortie les deux embrayages E1 et E2 et les deux freins F1 et F2 qui commandent le train épicycloïdal 2 représenté sur la fig. 1. L'ensemble hydraulique 22 reçoit des informations concernant la marche du véhicule au moyen d'un dispositif électronique 23 habituellement appelé gouverneur comparateur qui fournit des signaux de commande aux deux électrovannes EL1 et EL2 pilotant le distributeur hydraulique 22. Le gouverneur comparateur 23 reçoit des signaux correspondants à la vitesse du véhicule V à la charge du moteur d'entraînement, ou ce qui revient au même, la position de la pédale d'accélérateur « alpha » ainsi qu'à la position complètement enfoncée de la pédale d'accélérateur signalée par un contact dit « rétro-contact » RC ou contact de « Kick-down ». Le gouverneur-comparateur 23 reçoit également un signal provenant de la position du levier de sélection 24 qui est relié mécaniquement à une vanne manuelle VM qui agit également sur l'ensemble hydraulique 22. La vanne manuelle VM peut prendre six positions :
— position « première imposée » repérée 1 ;
— position « troisième interdite » (ou deuxième imposée) repérée 2 ;
— position «automatique » repérée A ;
— position « neutre » repérée N ;
— position « marche arrière » repérée R ;
— et position « parc » (ou arrêt bloqué) repérée P.

Une capsule à dépression 26 est d'autre part reliée au moteur d'entraînement du véhicule par l'intermédiaire d'un tuyau 27 afin de moduler la pression régnant dans le circuit hydraulique de l'ensemble 22 en fonction de la dépression régnant dans le collecteur d'admission du moteur. Cette dépression étant fonction du couple moteur, la pression dite pression de ligne, régnant dans le circuit hydraulique se trouve être également fonction du couple moteur.

Le boîtier électronique 23 ou gouverneur comparateur détermine l'état d'excitation des électro-aimants de pilotage des deux électrovannes EL1 et EL2 en fonction de l'état du levier de sélection 24 de la vitesse du véhicule et de la position de la pédale d'accélérateur. Les deux électrovannes pilotes EL1 et EL2 possèdent donc chacune deux états selon qu'elles sont excitées électriquement ou non.

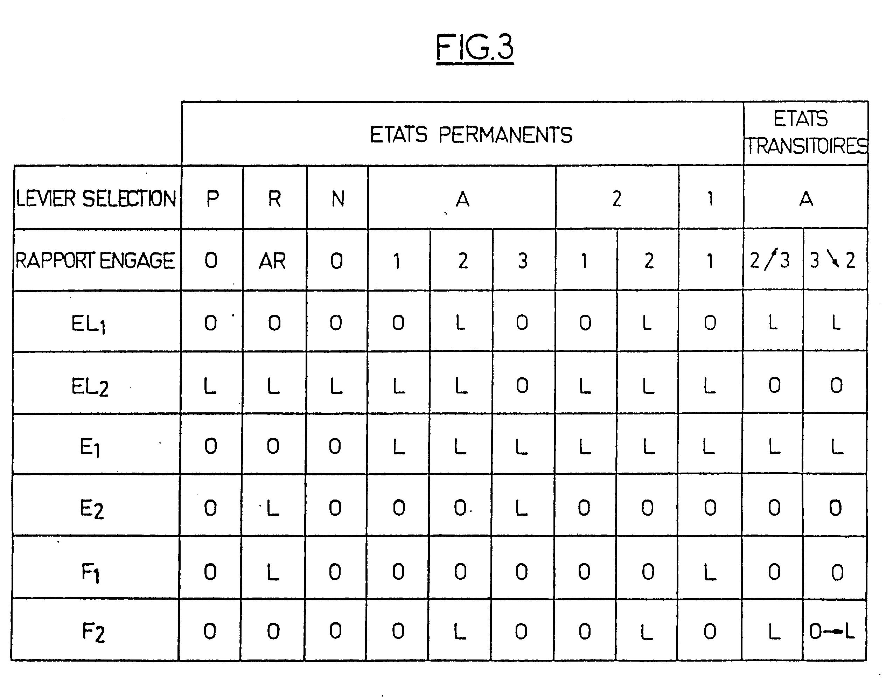

Le tableau de la fig. 3 montre l'état d'excitation des deux électrovannes EL1 et EL2 selon la position du levier de sélection 24 et selon le rapport engagé pour la transmission. Sur ce tableau, la référence O indique que l'électro-aimant de l'électrovanne correspondante n'est pas excité électriquement de sorte que l'électrovanne correspondante est ouverte et laisse passer un débit de fuite de fluide hydraulique. Au contraire le symbole L indique que l'électro-aimant de l'électrovanne correspondante est excité électriquement, l'électrovanne se trouvant fermée et ne laissant pas passer le fluide hydraulique.

Dans les positions « automatique » A et « troisième interdite » (deuxième imposée) repérée 2 du levier de sélection, le changement de rapport de la transmission est commandé par le boîtier électronique 23 en fonction de la vitesse du véhicule et de la position de la pédale d'accélérateur « alpha » selon des lois classiques pour les boîtes de vitesses automatiques.

L'ensemble distributeur hydraulique 22 a pour fonction d'assurer, selon les informations qu'il reçoit de la part du gouverneur-comparateur 23 et de la vanne manuelle VM l'alimentation sélective en fluide hydraulique des embrayages E1, E2 et des freins F1, F2 comme indiqué sur le tableau de la fig. 3 où le symbole O signifie comme précédemment que le récepteur correspondant n'est pas alimenté en fluide hydraulique tandis que le symbole L signifie que le récepteur correspondant est alimenté, les embrayages étant alors fermés et les freins bloqués. On notera qu'en ce qui concerne les états permanents de la transmission seuls trois états différents des deux électrovannes EL1 et EL2 sont utilisés. Pour les positions du levier de sélection P, R, N, A, lorsque le rapport engagé est la première vitesse et pour la position 1 (première imposée), l'électrovanne EL1 n'est en effet pas excitée c'est-à-dire ouverte tandis que l'électrovanne EL2 est excitée c'est-à-dire fermée. Lorsque le rapport engagé est la deuxième vitesse les deux électrovannes sont excitées c'est-à-dire fermées. Lorsque le rapport engagé est la troisième vitesse aucune électrovanne n'est excitée de sorte qu'elles sont toutes les deux ouvertes.

Conformément à la présente invention, on utilise le quatrième état possible des deux électrovannes, à savoir l'état dans lequel l'électrovanne EL1 est excitée c'est-à-dire fermée et l'électrovanne EL2 n'est pas excitée c'est-à-dire ouverte, pour déterminer un état transitoire correspondant au passage du troisième au deuxième rapport et vice versa.

On notera que les états transitoires représentés sur le tableau de la fig. 3 pour les passages de deuxième en troisième et de troisième en deuxième vitesses dans la position automatique A du levier de sélection se retrouvent pour le passage du levier de sélection de la position 2 (troisième interdite ou deuxième imposée) à la position automatique A ou vice versa.

Par ailleurs, pour satisfaire la transmission du couple dans les différents rapports, il est nécessaire de pouvoir disposer dans le circuit hydraulique de l'ensemble 22 de trois niveaux différents pour la pression de ligne : une pression haute pour le rapport de marche arrière, une pression moyenne pour la première vitesse et une basse pression pour les deuxième et troisième rapports de vitesse. Chacun de ces trois niveaux est de plus modulé par la capsule à dépression 26 en fonction du couple moteur.

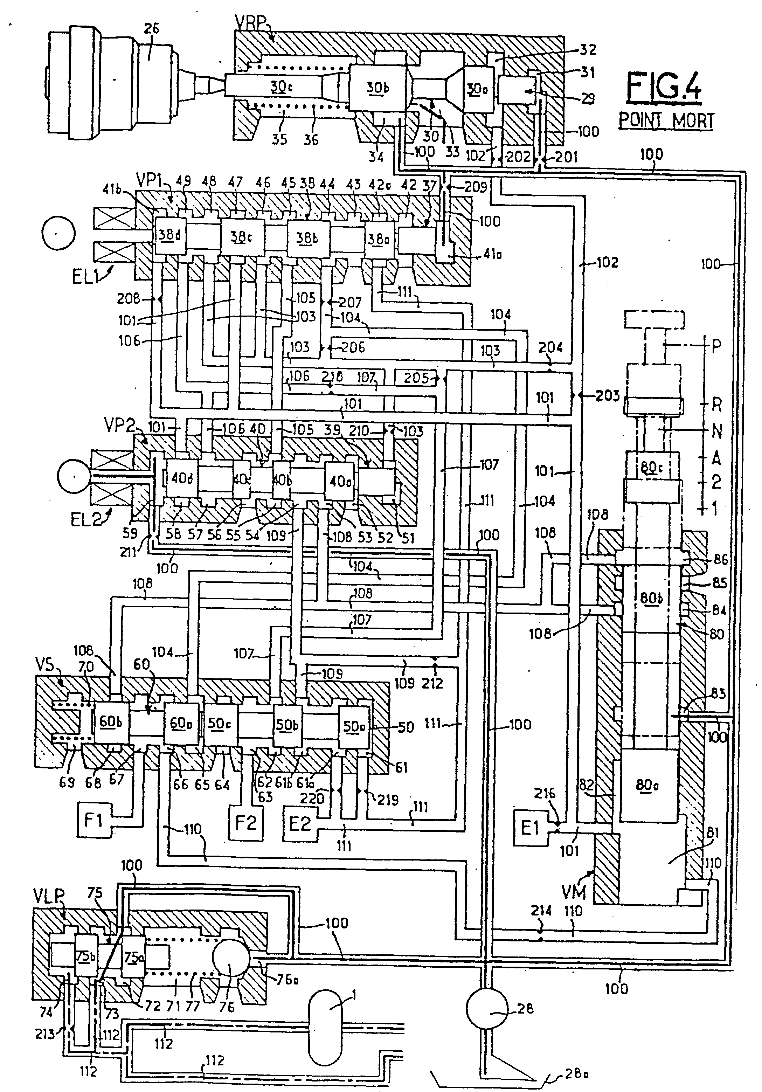

Les différents éléments constituant l'ensemble hydraulique 22 se retrouvent sur les fig. 4 à 11.

On décrira maintenant en se référant à la fig. 4 la structure de ces différents éléments. Le dispositif comprend principalement deux vannes de passage référencées VP1 et VP2 qui sont chacune associées à l'une des électrovannes EL1 et EL2 précédemment mentionnées et qui sont schématisées sur la fig. 4 par un électro-aimant et une bille. Dans la pratique on pourra utiliser en effet des électrovannes à billes telles que décrites en particulier dans le brevet français n° 1.422.165. Les deux vannes de passage VP1 et VP2 alimentent en fluide hydraulique une vanne relais ou vanne de séquence VS. Le dispositif comporte en outre une vanne de régulation de pression référencée VRP et une vanne de limitation de pression référencée VLP. On retrouve en outre sur la fig. 4 la vanne manuelle référencée VM. L'ensemble du circuit hydraulique est alimenté au moyen d'une pompe volumétrique 28 aspirant le fluide hydraulique à partir du bac 28a à travers une crépine.

La vanne de régulation de pression employée dans le dispositif de commande selon l'invention peut être d'un type quelconque dans la mesure où elle est capable de fournir les trois niveaux de pression nécessaires au fonctionnement de l'ensemble. Dans le mode de réalisation représenté sur les figures et en particulier sur la fig. 4, la vanne de régulation de pression référencée VRP comporte deux tiroirs 29 et 30 délimitant avec le corps du distributeur hydraulique que constitue la vanne de régulation de pression, cinq chambres référencées respectivement de la droite vers la gauche sur la figure 31, 32, 33, 34 et 35. Les chambres 33 et 35 sont à la pression atmosphérique. Dans la chambre 35 se trouve logé un ressort 36 dit ressort de pied levé. Le tiroir 29 présente une seule portée disposée entre les chambre 31 et 32. Le tiroir 30 présente deux portées 30a et 30b de section supérieure à la section du tiroir 29. Compte tenu de cette différence de sections, le tiroir de distribution est réalisé ici en deux éléments distincts 29 et 30. On comprendra cependant qu'un tiroir unique remplirait les mêmes fonctions. L'utilisation de deux tiroirs permet de simplifier la fabrication et de s'affranchir d'éventuels défauts d'alignement. La portée 30a se termine par une portion tronconique qui permet de définir entre les chambres 34 et 33 un passage de fuite de section variable pour le fluide hydraulique. Le tiroir 30 est soumis, par l'intermédiaire d'une tige 30c, à l'action de la capsule à dépression 26 reliée comme il a déjà été dit à la tubulure d'admission du moteur d'entraînement. Le ressort de pied levé 35 agit sur la portée 30b du tiroir 30 dans un sens tendant à déplacer les tiroirs 30 et 29 vers la droite sur les figures.

Lorsque le papillon des gaz du moteur d'entraînement est fermé, la dépression est maximale sur la capsule 26 qui annule alors l'effet de son ressort interne non représenté sur la figure. Au contraire lorsque le papillon des gaz est complètement ouvert, la dépression agissant sur la capsule 26 est minimale et l'effet de son ressort interne s'ajoute à celui du ressort 36.

La première vanne de passage VP1 comporte deux tiroirs 37 et 38. Le tiroir 37 à portée unique disposé dans le corps de vanne sur la droite sur la figure, présente une section inférieure à celle des quatre portées 38a, 38b, 38c et 38d du tiroir 38. Bien qu'il soit parfaitement possible de réaliser comme précédemment les tiroirs 37 et 38 au moyen d'une seule pièce usinée on comprendra que le fait de prévoir deux pièces indépendantes permet d'éviter toute difficulté en cas de léger défaut d'alignement des portées. Les tiroirs 37 et 38 peuvent occuper uniquement deux positions. Dans la première position, le tiroir 38 vient en contact avec la face interne gauche par rapport à la figure du corps de la vanne VP1. Dans la deuxième position, le tiroir 37 vient au contraire en contact avec la face interne droite du corps de vanne VP1. Le fonctionnement de la vanne de passage VP1 est donc un fonctionnement en tout ou rien.

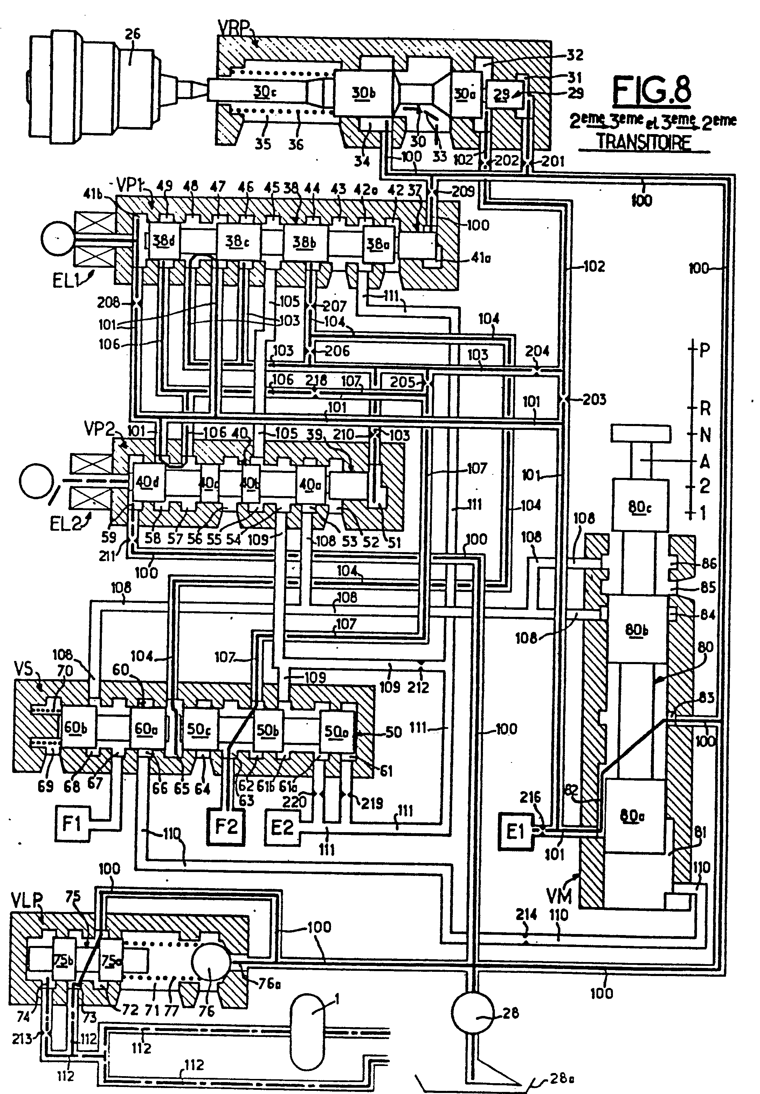

Les deux tiroirs 37 et 38 délimitent avec le corps du distributeur que constitue la vanne de passage VP1 onze chambres référencées depuis la droite vers la gauche 41a, 42, 42a, 43, 44, 45, 46, 47, 48, 49 et 41b. Les chambres 42 et 43 sont à la pression atmosphérique. La chambre d'extrémité gauche 41b est reliée directement au corps de l'électrovanne EL1 et se trouve mise à la pression atmosphérique lorsque la bille de ladite électrovanne n'est pas attirée par l'électroaimant c'est-à-dire lorsque l'électrovanne 1 est désexcitée ou en position ouverte. Lorsque les tiroirs de la vanne de passage VP1 sont en butée sur la gauche par rapport à la figure les chambres 43 et 44 sont en communication ainsi que les chambres 45, 46 et les chambres 48, 49. Lorsque les deux tiroirs 37 et 38 de la vanne de passage VP1 sont en butée sur la droite par rapport à la figure (voir par exemple la fig. 8), les chambres 42a et 43 sont en communication ainsi que les chambres 47 et 48.

La vanne de passage VP2 comporte également deux tiroirs 39 et 40. Le tiroir 39 monté dans le corps de la vanne VP2 à l'extrémité droite sur la figure, comporte une portée unique de section inférieure à celle de quatre portées 40a, 40b, 40c et 40d du tiroir 40. Comme précédemment, la réalisation des deux tiroirs 39 et 40 en deux pièces facilite le montage et permet de négliger les éventuels défauts d'alignement. Les tiroirs 39 et 40 peuvent également occuper uniquement deux positions soit à gauche, soit à droite, la vanne de passage VP2 fonctionnant comme la vanne de passage VP1 en tout ou rien. La vanne de passage VP2 est associée à l'électrovanne EL2 identique à l'électrovanne EL1 qui permet de commander hydrauliquement le déplacement des tiroirs 39 et 40.

Les tiroirs 39 et 40 délimitent avec le corps du distributeur que constitue la vanne de passage VP2 neuf chambres référencées depuis la droite vers la gauche 51, 52, 53, 54, 55, 56, 57, 58 et 59. Les chambres 52 et 56 sont à la pression atmosphérique. La chambre d'extrémité gauche 59 est en communication directe avec le conduit central de l'électrovanne EL2 de sorte que la chambre 59 se trouve à la pression atmosphérique lorsque la bille de l'électrovanne EL2 n'est pas attirée par son électro-aimant c'est-à-dire lorsque ladite électrovanne n'est pas excitée et se trouve en position ouverte.

Lorsque les deux tiroirs 39 et 40 sont en butée sur la gauche (voir par exemple fig. 8), les chambres 54 et 55 sont en communication ainsi que les chambres 57 et 58. Lorsque les deux tiroirs 39 et 40 sont au contraire en butée sur la droite, les chambres 53 et 54 sont en communication ainsi que les chambres 55 et 56.

On notera que le pilotage des deux vannes de passage VP1 et VP2 se fait de manière entièrement hydraulique et par la seule action des électrovannes EL1 et EL2 qui laissent ou non passer un débit de fuite. Les différents tiroirs des deux vannes de passage ne sont soumis à l'action d'aucun ressort ce qui simplifie considérablement le montage et le fonctionnement. Par ailleurs, on remarquera que les différents tiroirs sont tous symétriques de sorte qu'ils peuvent se monter alternativement dans un sens ou dans l'autre ce qui permet de simplifier les opérations de montage au cours desquelles il n'est plus nécessaire de vérifier l'orientation des tiroirs.

La vanne relais ou vanne de séquence VS comporte deux tiroirs indépendants 50 et 60. Le tiroir 50 placé dans la partie droite du corps de la vanne présente trois portées de sections identiques 50a, 50b et 50c. Le tiroir 60 placé dans la partie gauche du corps de la vanne comporte deux portées 60a et 60b de même section que les portées du tiroir 50.

Les deux tiroirs 50 et 60 délimitent avec le corps du distributeur que constitue la vanne relais VS onze chambres référencées depuis la droite vers la gauche par rapport à la figure 61, 61a, 61b, 62, 63, 64, 65, 66, 67, 68 et 69. Un ressort 70 agissant sur la portée 60b repousse les deux tiroirs 60 et 50 vers la droite. Le ressort 70 présente une force seulement légèrement supérieure à la force de frottement des deux tiroirs 50 et 60 dans le corps de la vanne VS pour l'ajustement le plus serré fourni par la fabrication.

Les chambres 64 et 69 sont reliées à la pression atmosphérique, la chambre 69 située à l'extrémité gauche du corps de vanne recevant le ressort 70. La séparation entre les tiroirs 50 et 60 se trouve dans la chambre 65 ou chambre intermédiaire.

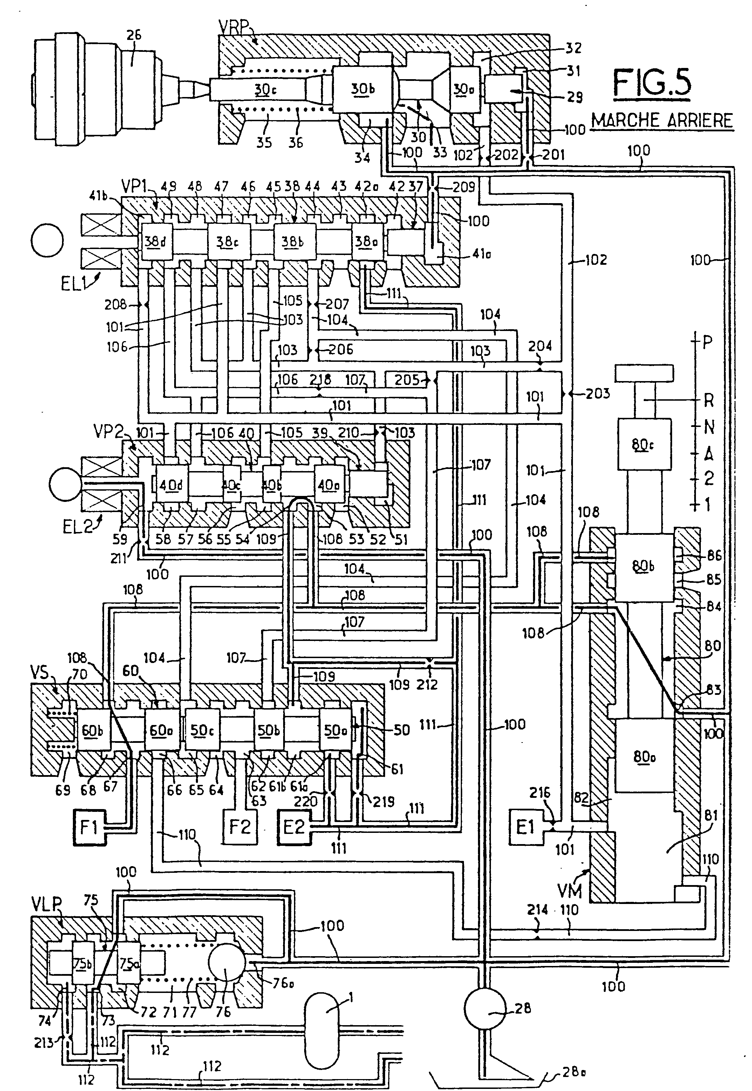

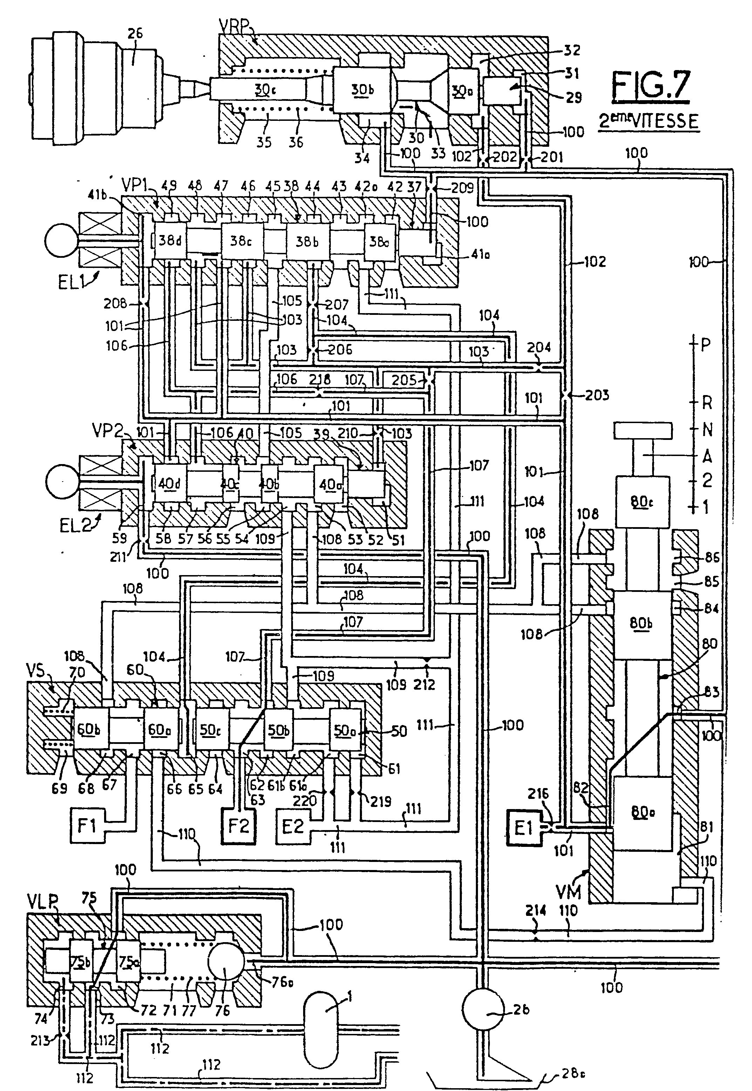

Lorsque les tiroirs 50 et 60 sont en butée sur la gauche (voir par exemple fig. 5) les chambres 63 et 64 sont en communication ainsi que les chambres 67 et 68. Lorsque les tiroirs 50 et 60 sont au contraire en butée sur la droite (voir par exemple fig. 4) les chambres 62 et 63 sont en communication ainsi que les chambres 66 et 67 et les chambres 61a et 61b. Lorsque les tiroirs 50 et 60 sont écartés l'un de l'autre (voir par exemple fig. 7) ce qui constitue leur troisième état possible, le tiroir 50 étant en butée sur la droite et le tiroir 60 en butée sur la gauche à l'encontre de la force du ressort 70, les chambres 61a et 61b sont en communication ainsi que les chambres 62 et 63. De plus, les chambres 67 et 68 sont également en communication.

La vanne de limitation de pression référencée VLP peut être de type classique. Elle a pour fonction de limiter la pression dans le circuit hydraulique et d'autre part d'alimenter et de réguler le circuit de lubrification de la transmission ainsi que le convertisseur de la boîte de vitesses. Dans le mode de réalisation représenté sur les figures, la vanne de limitation de pression VLP comprend un tiroir 75 muni de deux portées 75a et 75b de même section délimitant avec le corps du distributeur que constitue la vanne VLP quatre chambres référencées depuis la droite vers la gauche sur la figure 71, 72, 73 et 74. La chambre 71 est à la pression atmosphérique et elle reçoit un ressort hélicoïdal 77 qui s'appuie d'une part sur une bille 76 et d'autre part sur la portée 75a du tiroir 75. La bille 76 a pour fonction de fermer le passage 76a. Lorsque le tiroir 75 est en butée sur la gauche les chambres 72 et 73 sont en communication.

La vanne manuelle VM comporte un tiroir 80 muni de trois portées de même diamètre 80a, 80b et 80c délimitant avec le corps du distributeur que constitue la vanne manuelle VM six chambres référencées depuis le bas vers le haut par rapport à la figure 81, 82, 83, 84, 85 et 86. La chambre 85 est reliée à la pression atmosphérique. La vanne manuelle peut occuper les six positions correspondant aux six positions du sélecteur de commande 24 visible sur la fig. 2 et auquel elle est reliée mécaniquement.

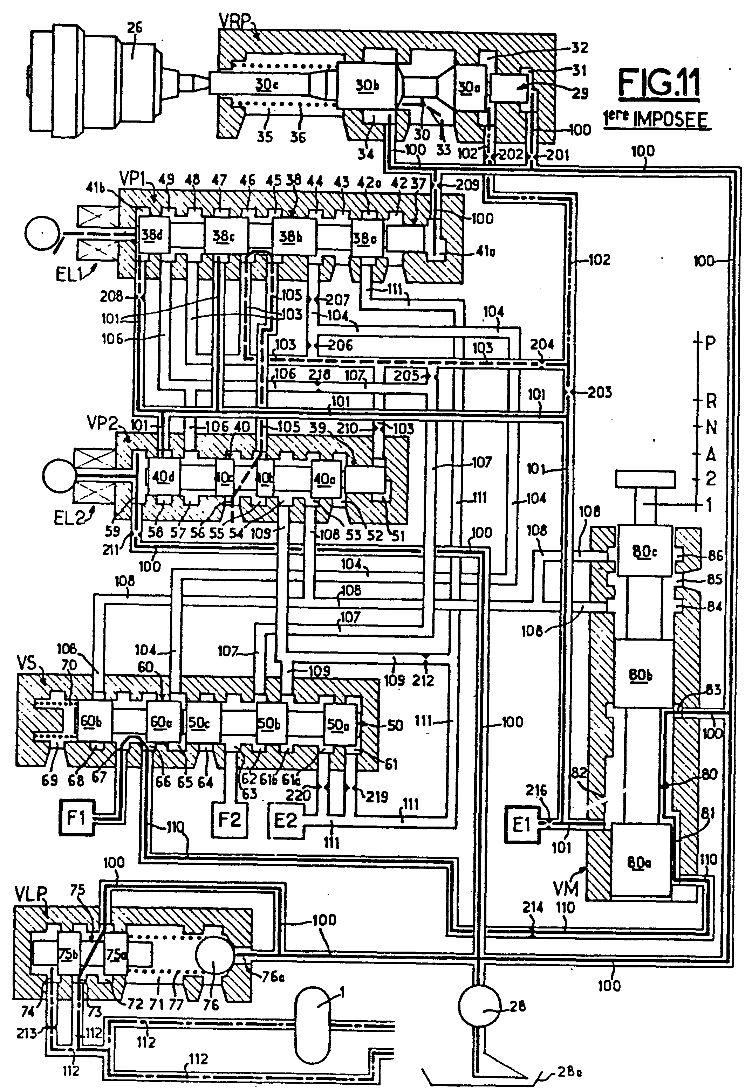

Dans la position 1 c'est-à-dire le plus vers le bas par rapport à la figure, (fig. 11) les chambres 81, 82 et 83 sont en communication ainsi que les chambres 84 et 85.

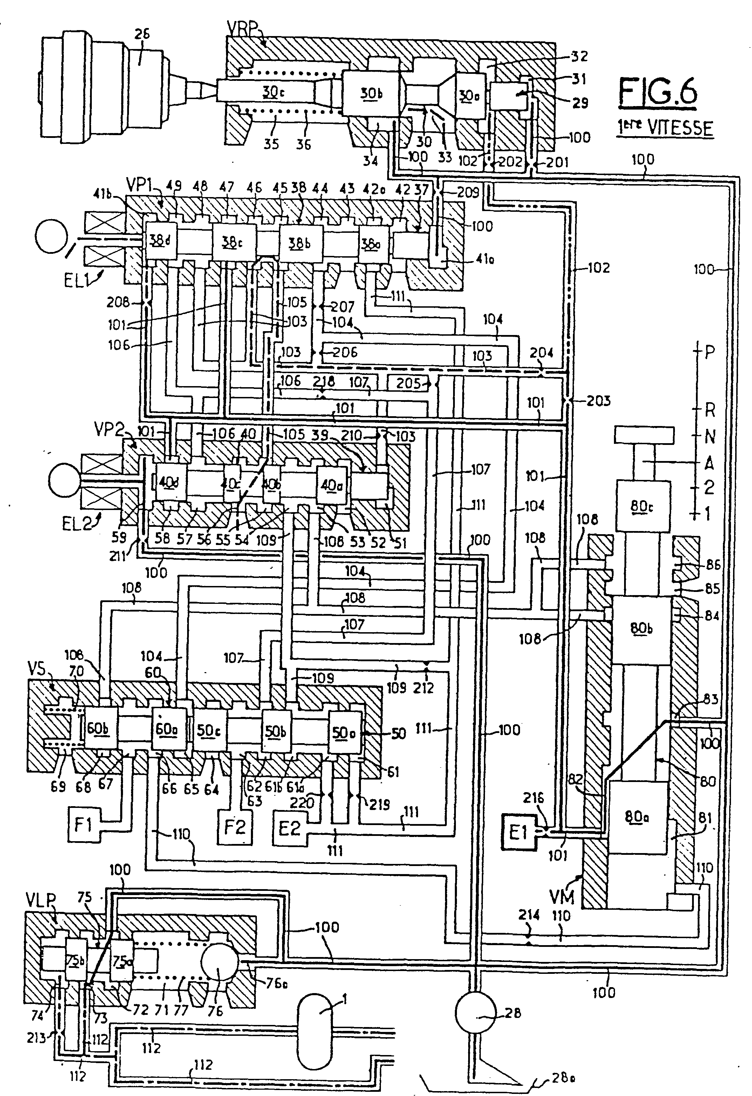

En position 2 les chambres 82 et 83 sont en communication ainsi que les chambres 84, 85 et 86. En position A (fig. 6) les chambres 82 et 83 sont en communication ainsi que les chambres 85 et 86. En position N (fig. 4) les chambres 81 et 82 sont en communication. En position R (fig. 5) les chambres 81 et 82 sont en communication ainsi que les chambres 83 et 84. En position P (fig. 4) les chambres 81 et 82 sont en communication ainsi que les chambres 84, 85 et 86.

On va maintenant décrire les différents conduits qui relient les différentes vannes entre elles et aux organes récepteurs.

Les chambres 31 et 34 de la vanne de régulation de pression VRP sont reliées au canal 100 d'arrivée de fluide hydraulique provenant de la pompe volumétrique 28. Dans le canal 100 en amont de la chambre 31 d'extrémité droite de la vanne VRP est disposé un gicleur d'amortissement 201. La chambre 32 est reliée au canal 102 par l'intermédiaire du gicleur 202.

Lorsque la chambre d'extrémité 31 est à la pression de ligne, l'effort excercé sur le tiroir 29 équilibre les efforts combinés du ressort 36 et de la capsule 26 : on obtient un premier niveau haut de la pression.

Lorsque la chambre d'extrémité 31 et la chambre intermédiaire 32 sont toutes deux à la pression de ligne, les efforts exercés sur le tiroir 29 et sur la portée 30a du tiroir 30 équilibrent les efforts combinés du ressort 36 et de la capsule 26 : on obtient un deuxième niveau bas de pression. Pour créer un niveau de pression supplémentaire intermédiaire, on dispose un premier gicleur 203 dans un canal 101 qui peut être mis en communication avec la pression de ligne par la vanne manuelle VM, et un deuxième gicleur 204 dans un canal 103 qui peut être relié d'une part à la pression atmosphérique par l'intermédiaire des vannes de passage VP1 et VP2 et d'autre part au canal 101 en aval du gicleur 203. La pression intermédiaire régnant entre les deux gicleurs 203 et 204, lorsqu'un débit de fuite existe dans le canal 103 situé en aval, est appliquée par l'intermédiaire du canal 102 à la chambre 32. Lorsque la chambre d'extrémité 31 est à la pression de ligne et la chambre intermédiaire 32 à cette pression intermédiaire, les efforts combinés de ces deux pressions sur le tiroir 29 et la portée 30a du tiroir 30 équilibrent les efforts combinés du ressort 36 et de la capsule 26 : on obtient un troisième niveau de pression intermédiaire aux niveaux de pression haut et bas.

La chambre d'extrémité droite 41a de la vanne de passage VP1 est reliée au canal 100 par l'intermédiaire du gicleur 209. La chambre 42a est reliée au canal 111 lui-même relié directement au deuxième embrayage E2. La chambre 44 est reliée au canal 104 par l'intermédiaire du gicleur 207 et au canal 103 par l'intermédiaire des gicleurs 207 et 206 disposés en série. La chambre 45 est reliée au canal 105. Les chambres 46 et 48 sont reliées au canal 103. La chambre 47 est reliée au canal 101. La chambre 49 est reliée au canal 106 et enfin la chambre d'extrémité gauche 41b est reliée au canal 101 par l'intermédiaire du gicleur 208.

La chambre 51 d'extrémité droite de la vanne de passage VP2 est reliée au canal 103 par l'intermédiaire du gicleur 210. La chambre 53 est reliée au canal 108. La chambre 54 est reliée au canal 109. La chambre 55 est reliée au canal 105. La chambre 57 est reliée au canal 106. La chambre 58 est reliée au canal 101 et enfin la chambre d'extrémité gauche 59 est reliée au canal 100 par l'intermédiaire d'un gicleur 211.

La chambre d'extrémité droite 61 de la vanne relais VS est reliée au canal 111 par l'intermédiaire du gicleur 219. La chambre 61a est reliée au canal 111 et au deuxième embrayage E2 par l'intermédiaire du gicleur 220. La chambre 61b est reliée au canal 109 ; la chambre 62 est reliée au canal 107 ; la chambre 63 est reliée directement au deuxième frein F2 ; la chambre 65 est reliée au canal 104 ; la chambre 66 est reliée au canal 110 ; la chambre 67 est reliée directement au premier frein F1 et la chambre 68 est reliée au canal 108.

La chambre 72 de la vanne de limitation de pression VLP ainsi que son orifice 76a qui peut être obturé par la bille 76 sont reliés au canal d'alimentation 100. La chambre 73 est reliée au canal 112 qui alimente par ailleurs le circuit du convertisseur 1 de la transmission ainsi que le circuit de lubrification. La chambre 74 est reliée au canal 112 par l'intermédiaire du gicleur 213.

La chambre 81 de la vanne manuelle VM est reliée au canal 110 par l'intermédiaire du gicleur 214. La chambre 82 est reliée directement au canal 101 et par l'intermédiaire du gicleur 216 à l'embrayage de marche avant E1. La chambre 83 est reliée au canal 110. Les chambres 84 et 86 sont reliées au canal 108.

On va maintenant décrire le fonctionnement du dispositif pour les différentes positions du levier de sélection commandant la vanne manuelle et pour les différents rapports de transmission.

On se référera tout d'abord à la fig. 4 sur laquelle le tiroir 80 de la vanne manuelle VM a été représentée en pointillés dans la position P du sélecteur de vitesse et en trait plein pour la position N. En position P, lorsque le moteur d'entraînement du véhicule tourne et entraîne la pompe 28, le canal 100 se remplit de fluide hydraulique. Les chambres 31 et 34 de la vanne de régulation de pression VRP se remplissent et la valeur de la pression régnant dans le canal 100 est fonction de la consigne donnée par le ressort 36, la capsule à dépression 26 et la section du tiroir 29. La pression régnant dans la chambre 31 provoque en effet un déplacement du tiroir 30 et un débit de fuite déterminé par la position relative de la portée 30b par rapport aux chambres 33 et 34, la chambre 33 étant à la pression atmosphérique et la chambre 34 alimentée par le canal 100. La vanne de régulation de pression VRP délivre un niveau de pression dans le canal 100 correspondant à la haute pression nécessaire pour la marche arrière.

Le canal 100 alimente également la chambre 72 de la vanne de limitation de pression VLP et l'orifice 76a. La pression régnant dans le canal 112 est alors fonction du ressort 77 et de la section de la portée 75b du tiroir 75 sur laquelle s'exerce la pression régnant dans la chambre 74. Si la pression dans le canal 100 augmente exagérément à cause d'un fonctionnement défectueux de l'ensemble du circuit hydraulique, la bille 76 se soulève de son siège et fait office de clapet de sécurité en autorisant un débit de fuite par l'entrée 76a de la vanne de limitation de pression VLP. Dans cette position du sélecteur de vitesse, la vanne manuelle VM est en position P. Les tiroirs 37 et 38 de la vanne de passage VP1 sont en butée sur la gauche car l'électro-aimant de l'électrovanne EL1 est désexcité, l'électrovanne correspondante étant ouverte comme on peut le voir sur la fig. 4. La chambre 41a d'extrémité droite de la vanne de passage VP1 est alimentée par le canal 100 ce qui repousse les deux tiroirs 37 et 38 vers la gauche.

Les deux tiroirs 39 et 40 de la vanne de passage VP2 sont en butée sur la droite car l'électro-aimant de l'électrovanne EL2 est excité l'électrovanne correspondante étant fermée comme on peut le voir sur la fig. 4. La chambre 59 est alimentée par le canal 100 de sorte que les deux tiroirs 39 et 40 sont repoussés vers la droite. Les canaux 101, 102, 103, 104, 105, 106, 107, 108, 109, 110 et 111 sont au zéro. La chambre 61 de la vanne relais VS est au zéro et les tiroirs 50 et 60 sont en butée sur la droite sous l'action du ressort 70, l'embrayage E2 est donc également au zéro. Le frein F2 est au zéro par l'intermédiaire des chambres 62 et 63 de la vanne relais VS. Le frein F1 est au zéro par l'intermédiaire des chambres 66 et 67 de la vanne relais VS et l'embrayage E1 est au zéro par la chambre 82 de la vanne manuelle VM. Dans ces conditions aucun embrayage et aucun frein ne sont en prise et la transmission est en configuration de point mort. On voit sur la fig. 4 représentées en gros traits pleins les canalisations qui sont alimentées en fluide hydraulique à la pression de ligne. Les gros traits pointillés ou mixtes représentent conventionnellement le fluide hydraulique à une pression inférieure à la pression de ligne.

Le passage de la position P à la position R de la vanne manuelle s'effectue de la manière suivante.

Les électrovannes EL1 et EL2 restent dans le même état que pour la position P ; les vannes de passage VP1 et VP2 restent donc dans la même position comme on peut le voir sur la fig. 5.

Dans la position R de la vanne manuelle VM les canaux 100 et 108 sont en communication par les chambres 83 et 84. Le canal 108 alimente les chambres 53 et 54 de la vanne de passage VP2 et le canal 109 se remplit de fluide. A partir du canal 109, l'embrayage E2 commence à s'alimenter par l'intermédiaire des chambres 61b et 61a de la vanne relais VS au travers du gicleur 220 ainsi que par le canal 111 au travers du gicleur 212. C'est la montée en pression dans cet embrayage E2 qui va commander l'alimentation du frein F1. En effet, la chambre 61 de la vanne relais se remplit de fluide et pour un certain niveau de pression dans cette chambre les tiroirs 50 et 60 se déplacent vers la gauche comme représenté sur la fig. 5 ce qui permet l'alimentation du frein F1 à partir du canal 108 par l'intermédiaire des chambres 67 et 68 de la vanne relais VS. A partir de ce moment, l'alimentation de l'embrayage E2 ne se fait plus que par le gicleur 212, les chambres 61b et 61a n'étant plus en communication. Il en résulte une fin de remplissage de l'embrayage E2 plus lente qu'auparavant. On notera qu'aucun gicleur n'est prévu sur le canal d'alimentation 108 de F1 de sorte que le remplissage de F1 est plus rapide que celui de E2 compte tenu de l'existence des gicleurs 212 et 220. Or, le frein F1 utilisé en marche arrière devant absorber des efforts de réaction importants est de plus grande capacité que l'embrayage E2 : le fait de terminer le passage sur le rapport de marche arrière avec le récepteur de plus faible capacité permet de limiter l'effet de choc éventuel.

Lorsque l'embrayage E2 et le frein F1 sont tous les deux alimentés, la transmission se trouve en configuration de marche arrière. Le frein F2 est au zéro par les chambres 63 et 64 de la vanne relais VS. L'embrayage E1 est au zéro par la chambre 82 de la vanne manuelle VM.

On se reportera maintenant à nouveau à la fig. 4 qui représente en trait plein la position de la vanne manuelle VM lorsque le sélecteur de vitesse est en position N.

Lors du passage de la marche arrière à la position N, les électrovannes EL1 et EL2 restent dans le même état qu'en « Parc » et en marche arrière. Les vannes de passage VP1 et VP2 restent également dans la même position. Les canaux 101, 108 et 110 sont au zéro par les chambres 82, 86 et 81 de la vanne manuelle. Le canal 109 est au zéro par les chambres 54 et 53 de la vanne de passage VP2. Le canal 111 est au zéro et permet la vidange de l'embrayage E2 et de la chambre 61 de la vanne relais VS. Lorsque la pression dans la chambre 61 de ladite vanne relais diminue suffisamment, le ressort 70 repousse les deux tiroirs 60 et 50 en butée sur la droite et le frein F1 se vidange par les chambres 67 et 66 de la vanne relais VS et le canal 110. Le frein F2 est au zéro par les chambres 63 et 62 de la vanne relais VS, le canal 107 et le canal 106 en passant par les chambres 49 et 48 de la vanne de passage VP1 puis le canal 103, les canaux 102 et 101 et la chambre 82 de la vanne manuelle VM. L'embrayage E1 est au zéro par la chambre 82 de la vanne manuelle VM. Le niveau de la pression de ligne fourni par la vanne de régulation de pression VRP est toujours la haute-pression nécessaire pour la marche arrière et la boîte de vitesses est en configuration de point mort.

La fig. 6 illustre le circuit du fluide hydraulique pour la position A de la vanne manuelle VM dans le cas où le premier rapport de vitesse est engagé. La position A de la vanne manuelle correspond au fonctionnement de marche avant avec passage automatique des vitesses sur les trois rapports de la transmission. Les électro-aimants des deux électrovannes EL1 et EL2 sont commandés par le gouverneur comparateur 23 de la fig. 2 et leur état est fonction de la vitesse du véhicule et de la position de la pédale d'accélérateur. A l'arrêt du véhicule les électrovannes EL1 et EL2 sont toujours dans la même configuration que pour les positions « Parc » marche arrière et neutre et les vannes de passage VP1 et VP2 restent dans le même état que sur les fig. 4 et 5. Dans la position « automatique » représentée sur la fig. 6, les chambres 82 et 83 de la vanne manuelle VM sont en communication de sorte que le canal 101 se remplit de fluide et que l'embrayage E1 ou embrayage de marche avant se trouve alimenté à partir du canal 101 au travers du gicleur 216. A partir du canal 101, le canal 102 se remplit de fluide au travers du gicleur 203 et le canal 103 est alimenté en fluide à partir du canal 102 à travers le gicleur 204. Le canal 103 peut se vidanger par les chambres 46 et 45 de la vanne de passage VP1, le canal 105 et les chambres 55 et 56 de la vanne de passage VP2 qui sont en communication avec la pression atmosphérique. Un débit s'établit donc à travers les gicleurs 203 et 204 et un niveau de pression intermédiaire entre la pression régnant dans le canal 101 et la pression nulle régnant dans le canal 103, apparaît dans le canal 102 et la chambre 32 de la vanne de régulation de pression VRP. Cette vanne VRP se trouve en équilibre sous l'action de la pression de ligne régnant dans la chambre 31, de la pression intermédiaire régnant dans la chambre 32 et sous l'action du ressort 36 et de la capsule à dépression 26. La vanne de régulation de pression VRP délivre comme pression de ligne un niveau de pression moyen nécessaire pour le rapport de première vitesse de la transmission.

Le canal 103 met au zéro le canal 107 par les chambres 49 et 48 de la vanne de passage VP1. Le canal 104 est au zéro par les chambres 44 et 43 de la vanne de passage VP1. La pression de ligne qui régnait déjà dans la chambre 41a s'établit dans la chambre 47 de la vanne de passage VP1.

Le canal 108 est au zéro par les chambres 86 et 85 de la vanne manuelle VM. Les canaux 109 et 111 sont au zéro par les chambres 54 et 53 de la vanne de passage VP2 et le canal 108. Le canal 110 est au zéro par la chambre 81 de la vanne manuelle VM. Les deux tiroirs 50 et 60 de la vanne relais VS sont en butée sur la droite sous l'action du ressort 70.

Seul l'embrayage de marche E1 est alimenté et la transmission est en configuration de première vitesse. Dans cette configuration, la couronne dentée 15 (fig. 1) est en effet entraînée par l'arbre 5 de turbine. La réaction du train épicycloïdal se fait sur la roue libre 14 qui se bloque par l'intermédiaire du porte-satellite 20. Le porte-satellite 17 et la couronne dentée 18 transmettent le couple à l'arbre de sortie 10.

La fig. 7 illustre la circulation du fluide hydraulique pour l'état permanent du deuxième rapport de vitesse. Lorsque le véhicule augmente sa vitesse et/ou que la charge du moteur augmente, le gouverneur 23 (fig. 2) donne l'ordre d'excitation de l'électro-aimant de l'électrovanne EL1 de sorte que les deux électrovannes EL1 et EL2 se trouvent fermées comme représenté sur la fig. 7. La chambre d'extrémité gauche 41b de la vanne de passage VP1 se remplit de fluide ce qui provoque, compte tenu de la section plus importante de la portée 38d par rapport à la section du tiroir 37, le basculement des tiroirs 38 et 37 vers la droite dans la position représentée sur la fig. 7. Dans cette nouvelle position de la vanne de passage VP1, la mise à zéro du canal 103 qui se faisait par les chambres 46 et 45 et le canal 105 se trouve obturée. La pression régnant dans le canal 102 et la chambre 32 de la vanne de régulation de pression VRP devient la pression délivrée par la pompe 28. En effet, il n'y a plus de débit entre les deux gicleurs 203 et 204 et la même pression règne dans les canaux 101, 102 et 103. La vanne de régulation de pression VRP se trouve en équilibre sous l'action de la pression régnant dans la chambre 32, la force du ressort 36 et l'action de la capsule à dépression 26. Le niveau de pression s'établit au niveau bas nécessaire pour les second et troisième rapports de vitesse.

Le canal 101 alimente les chambres 47 et 48 de la vanne de passage VP1 et la pression de ligne s'établit également dans le canal 103. Le frein F2 est alimenté à travers le gicleur 205 qui limite la vitesse de remplissage par le canal 107 et les chambres 62 et 63 de la vanne relais VS.

L'embrayage de marche avant E1 reste alimenté et le frein F2 se bloque. L'embrayage E2 et le frein F1 étant toujours vidangés, la transmission se trouve dans une configuration de deuxième rapport de vitesse.

A partir du canal 103, le canal 104 est alimenté à la pression de ligne et la chambre intermédiaire 65 de la vanne relais VS est soumise à la pression de ligne. Dans ces conditions, le tiroir 50 reste en butée vers la droite tandis que le tiroir 60 se déplace jusqu'à venir en butée sur la gauche à l'encontre du ressort 70. On verra que cet état intermédiaire de la vanne relais VS sera utilisé pour le passage du troisième rapport de vitesse.

Si l'on rapporte à la fig. 1 on voit que dans cette configuration, l'embrayage E1 étant serré, l'entrée du train épicycloïdal se fait par la première couronne dentée 15 et la sortie par le premier porte-satellite 17 et la deuxième couronne dentée 18. Le serrage du frein F2 qui doit se produire progressivement, rend le planétaire 19 solidaire du carter 9. Le planétaire 19 qui était en effet entraîné en rotation pour la première vitesse doit être complètement arrêté pour l'obtention du deuxième rapport.

La fig. 8 illustre la circulation du fluide dans l'état transitoire correspondant au passage de la deuxième vitesse à la troisième vitesse. Lorsque le véhicule augmente sa vitesse et/ou la charge du moteur augmente, l'ordre de passer sur le troisième rapport est donné par le gouverneur 23 (fig. 2). Dans un premier temps correspondant à l'état transitoire de la fig. 8, l'électro-aimant de l'électrovanne EL2 est désexcité ce qui ouvre l'électrovanne EL2 mettant ainsi à la pression atmosphérique la chambre d'extrémité gauche 59 de la vanne de passage VP2 dont les tiroirs 39 et 40 viennent donc en butée sur la gauche. Les canaux 101 et 106 sont mis en communication par l'intermédiaire des chambres 57 et 58 de la vanne de passage VP2. Le canal 107 se trouve donc alimenté à travers le gicleur 218 de section plus grande que le gicleur 205 et le frein F2 reste bloqué. De ce fait, la transmission est toujours dans une configuration de deuxième rapport de vitesse. On notera que le passage de la deuxième à la troisième vitesse s'effectue par cet état transitoire où l'électrovanne EL2 est ouverte tandis que l'électrovanne EL1 reste fermée. La configuration dans laquelle l'électrovanne EL1 est ouverte et l'électrovanne EL2 fermée correspondrait en effet à la première vitesse. On remarquera de plus que dans cette configuration transitoire telle que représentée sur la fig. 8, la chambre intermédiaire 65 de la vanne relais VS est toujours soumise à la pression de ligne de sorte que le tiroir 50 reste en butée sur la droite et le tiroir 60 en butée sur la gauche.

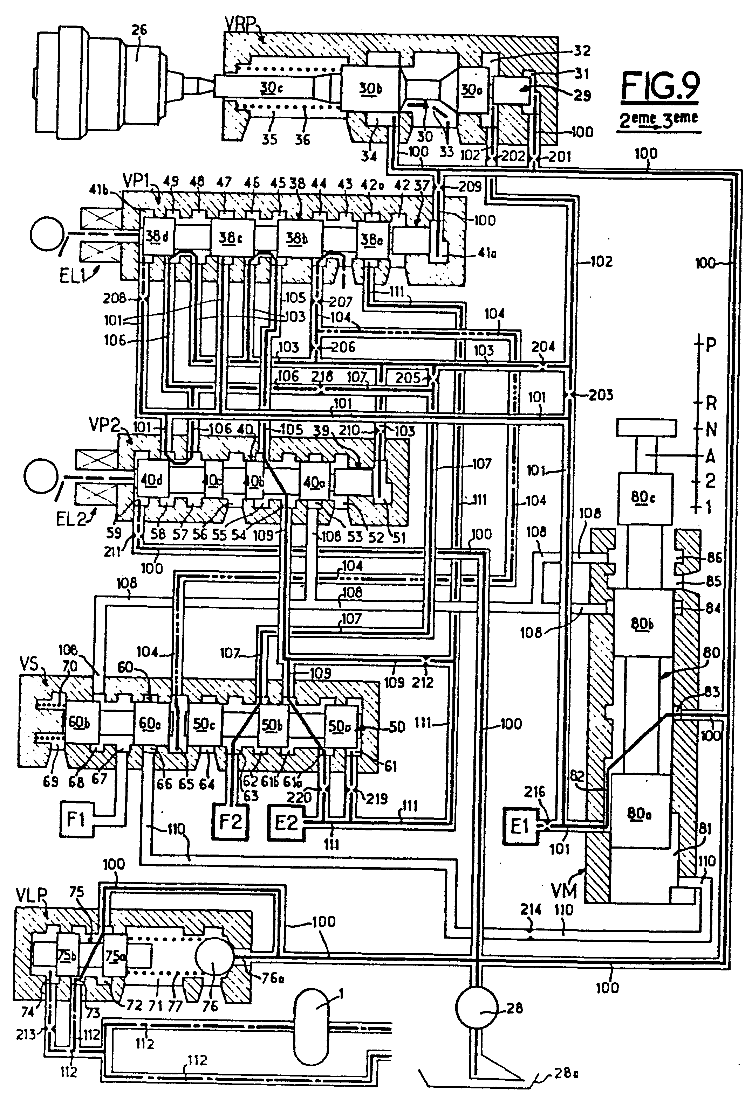

Après cette période transitoire dont la durée très courte et constante est déterminée par le gouverneur 23, ce dernier coupe l'alimentation électrique de l'électro-aimant de l'électrovanne EL1 qui s'ouvre. Dans cette configuration représentée sur la fig. 9, les deux électrovannes EL1 et EL2 sont ouvertes. La chambre d'extrémité gauche 41b de la vanne de passage VP1 étant de ce fait mise à l'atmosphère, les deux tiroirs 37 et 38 viennent en butée sur la gauche sous l'action de la pression de ligne régnant dans la chambre d'extrémité droite 41a. Les chambres 43 et 44 viennent en communication et permettent un débit de fuite du canal 103 à travers les gicleurs en série 206 et 207. Une pression intermédiaire s'établit entre ces deux gicleurs et apparaît dans le canal 104. Cette pression intermédiaire ou pression de coupure s'établit dans la chambre intermédiaire 65 de la vanne relais VS. La pression de coupure intermédiaire est représentée sur la fig. 9 par un gros trait mixte.

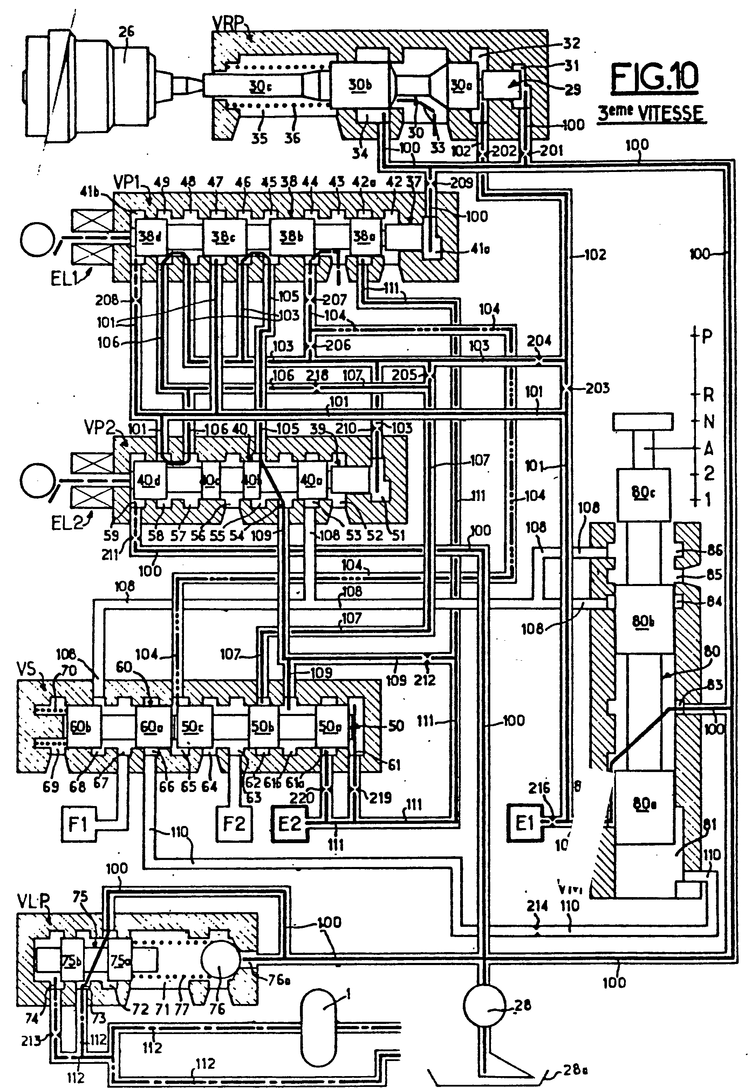

A partir du canal 103, les chambres 46 et 45 de la vanne de passage VP1 se remplissent de fluide et l'embrayage E2 se remplit également par le canal 105, les chambres 55 et 54 de la vanne de passage VP2, le canal 109, le gicleur 212 et le canal 111. L'embrayage E2 se remplit également par les chambres 61b et 61a de vanne relais VS, le gicleur 220 et le canal 111. Dans cet état transitoire tel que représenté sur la fig. 9 l'embrayage de marche avant E1 est toujours rempli, et le frein F2 également rempli est toujours bloqué de sorte que la transmission est toujours sur le deuxième rapport. De plus l'embrayage E2 commence à se remplir. Dans la chambre 61 d'extrémité droite de la vanne relais VS s'établit progressivement à travers le gicleur 219 la pression régnant dans l'embrayage E2. Pour un certain niveau de remplissage de cet embrayage, la pression dans la chambre 61 devient supérieure à la pression de coupure ou pression de consigne régnant dans la chambre intermédiaire 65. A partir de ce moment le tiroir 50 bascule vers la gauche ce qui entraîne la mise à zéro des chambres 63 et 64 et la vidange du frein F2. L'embrayage E2 continue à se remplir, mais plus lentement, à travers le seul gicleur 212 et le canal 111. Lorsque l'embrayage E2 est complètement rempli, on se trouve en configuration de troisième vitesse tel que représenté sur la fig. 10.

Dans cette configuration, les embrayages E1 et E2 étant remplis, le train épicycloïdal se trouve bloqué. La première couronne 15 tourne à la vitesse de la turbine et le planétaire 19 tourne à la même vitesse.

On voit que la vanne relais VS joue un rôle de coupure entre l'embrayage E2 et le frein F2 grâce à l'existence de la chambre intermédiaire 65 séparant les deux tiroirs 50 et 60. En effet, lorsque la pression régnant dans l'embrayage E2 devient plus faible, que la pression de consigne régnant dans la chambre intermédiaire 65, le tiroir 50 bascule vers la droite ce qui provoque l'alimentation du frein F2. Au contraire lorsque la pression dans l'embrayage E2 devient plus grande que la pression de consigne, le tiroir 50 bascule vers la gauche comme il vient d'être expliqué en venant se plaquer contre le tiroir 60 qui se trouvait déjà en butée vers la gauche en raison de la pression régnant dans la chambre intermédiaire 65. Dans cette configuration, le frein F2 n'est plus alimenté et est mis à la bâche. C'est finalement la variation de la pression dans l'embrayage E2 par rapport à une pression de consigne régnant dans la chambre intermédiaire 65 de la vanne relais VS qui coupe ou alimente le frein F2.

On a vu par ailleurs en référence avec la fig. 5 pour la configuration de marche arrière que la vanne relais avait également pour fonction d'alimenter simultanément l'embrayage E2 et le frein F1. Dans ce cas où la chambre intermédiaire 65 n'est pas alimentée les deux tiroirs 50 et 60 étant en contact, c'est en effet une légère montée en pression dans l'embrayage E2 qui provoque le déplacement des deux tiroirs 50 et 60 contre l'extrémité gauche du corps de la vanne relais VS permettant de ce fait l'alimentation du frein F1. Cette légère surpression suffit à repousser le ressort 70 de faible force et à vaincre les frottements sur les tiroirs.

Lorsque la transmission est en configuration de troisième vitesse comme représenté sur la fig. 10 et que le conducteur désire par exemple effectuer un dépassement, il écrase l'accélérateur et, afin de donner le maximum d'accélération au véhicule, le dispositif électronique 23 donne l'ordre à la transmission de passer en deuxième vitesse. Ceci nécessite la vidange de l'embrayage E2 et le serrage du frein F2 et le passage par l'état transitoire de la fig. 8. La durée de maintien de cet état transitoire présente une grande importance car elle conditionne la qualité du passage.

Trois cas peuvent se présenter dans la pratique. Dans le premier cas, le conducteur a le pied sur l'accélérateur et la vitesse du véhicule est importante. Dans ce cas, la vitesse de synchronisme du moteur est élevée et il est nécessaire pour passer de troisième en deuxième vitesse de laisser au moteur le temps de s'emballer pour atteindre la vitesse de synchronisation. Etant donné que la vitesse du moteur au début du passage est relativement faible, il convient de laisser un temps suffisamment long au moteur pour atteindre cette vitesse de synchronisme.

Dans le deuxième cas, le conducteur a toujours le pied sur l'accélérateur mais le véhicule se déplace avec une vitesse faible. Il en résulte que la vitesse de synchronisme est faible et qu'il suffit d'un temps plus court que précédemment pour que le moteur atteigne la vitesse de synchronisme.

Dans le troisième cas le conducteur n'appuie pas sur l'accélérateur. On se trouve en position dite « pied levé » et le véhicule se déplace avec une vitesse relativement faible. La vitesse de synchronisme du moteur est faible et l'écart de vitesse est peu important comme dans le cas précédent. Cependant, la montée en régime du moteur n'est ici assurée que par l'énergie cinétique du véhicule qui est susceptible d'entraîner le moteur dès que le frein F2 commence à se bloquer. On notera que l'énergie cinétique du véhicule est relativement faible puisque celui-ci possède une faible vitesse et que le moteur est alimenté au ralenti. Dans ce troisième cas il est donc nécessaire de laisser au moteur un temps relativement long pour atteindre la vitesse de synchronisme.

Le temps de passage total qui varie comme on vient de le voir en fonction de la vitesse du véhicule et selon que le conducteur a le pied sur l'accélérateur ou le pied levé, correspond à la durée totale d'alimentation du frein F2. Le dispositif de commande de l'invention permet de réaliser un temps de remplissage du frein F2 qui soit plus long aux vitesses importantes que pour les faibles vitesses du véhicule. Dans ce but, le dispositif de l'invention utilise le quatrième état des deux électrovannes EL1, EL2 telles que représentées sur la fig. 8 où l'électrovanne EL1 excitée est fermée et l'électrovanne EL2 désexcitée est ouverte. Cet état transitoire correspond à une première période du passage de troisième vitesse en deuxième vitesse. Dès que l'ordre de passage est donné, le dispositif électronique 23 fournit une commande d'excitation de l'électrovanne EL1 qui se ferme, l'électrovanne EL2 restant ouverte. Les tiroirs 37 et 38 de la vanne de passage VP1 viennent donc en butée sur la droite. Les chambres 43 et 44 ne sont plus en communication et le débit qui s'écoulait à travers les gicleurs 206 et 207 (fig. 10) devient nul. La pression de ligne s'établit de ce fait dans le canal 104 et dans la chambre intermédiaire 65 de la vanne relais VS. Par ailleurs, le canal 111 est mis en communication par la chambre 42a avec la chambre 43 à la pression atmosphérique de la vanne de passage VP1 permettant ainsi la vidange de l'embrayage E2 par les canaux 105, 109 et 111. Dès que la vidange de l'embrayage E2 commence, la pression dans la chambre 61 d'extrémité droite de la vanne relais diminue. Sous l'action de la pression de ligne régnant dans la chambre intermédiaire 65, le tiroir 50 de la vanne VS bascule vers la droite permettant l'alimentation du frein F2 par les chambres 63 et 62 de la vanne relais VS, le canal 107, le gicleur 218, le canal 106, les chambres 57 et 58 de la vanne de passage VP2 et le canal 101 qui se trouve à la pression de ligne. Le frein F2 est en outre alimenté à travers le gicleur 205, le canal 103, les chambres 47 et 48 de la vanne de passage VP1 et le canal 101.

Selon l'invention, la section de passage laissée par la restriction que constitue le gicleur 218 est plus importante que la section de passage laissée par la restriction que constitue le gicleur 205 reliant le canal 107 au canal 103. Dans ces conditions, le frein F2 se trouve alimenté dans cet état transitoire à grande vitesse par le grand passage du gicleur 218 en même temps que par le petit passage du gicleur 205.

Après une durée de maintien de l'état transitoire convenablement déterminée par le dispositif électronique 23 en fonction de la vitesse du véhicule et selon que le conducteur a le pied sur l'accélérateur ou le pied levé, le gouverneur 23 donne l'ordre d'excitation de l'électrovanne EL2. La circulation du fluide qui était représentée sur la fig. 8 devient celle qui est représentée sur la fig. 7. Dans cette position, les deux tiroirs de la vanne de passage VP2 sont en butée sur la droite et les chambres 57 et 58 qui permettaient l'alimentation à grande vitesse du frein F2 par le grand passage du gicleur 218 ne se trouvent plus en communication. Le canal 107 ne peut de ce fait plus être alimenté directement par le canal 101 et le gicleur 218 mais ne se trouve alimenté que par le canal 103 à travers le gicleur 205 dont la section de passage est plus faible comme il vient d'être expliqué. Dans cette position, le frein F2 se trouve donc alimenté à faible vitesse. Lorsque le frein F2 est complètement rempli et que l'embrayage E2 est complètement vidangé, la transmission est en configuration de deuxième rapport de vitesse. Grâce à ce passage en deux étapes il devient possible d'obtenir le bloquage du frein F2 au moment exact où le moteur atteint la vitesse de synchronisme.

Le passage de la troisième vitesse à la deuxième vitesse se fait de la même manière à l'aide du levier de sélection qui déplace la vanne manuelle VM de la position A à la position 2. Dans cette configuration en effet, la vanne manuelle VM ne modifie pas la circulation du fluide telle qu'elle est représentée sur les fig. 8 et 7. Là encore on tient compte de la vitesse du véhicule et du fait que le conducteur appuie sur l'accélérateur ou a le pied levé, pour déterminer la durée du maintien de la première phase transitoire du passage.

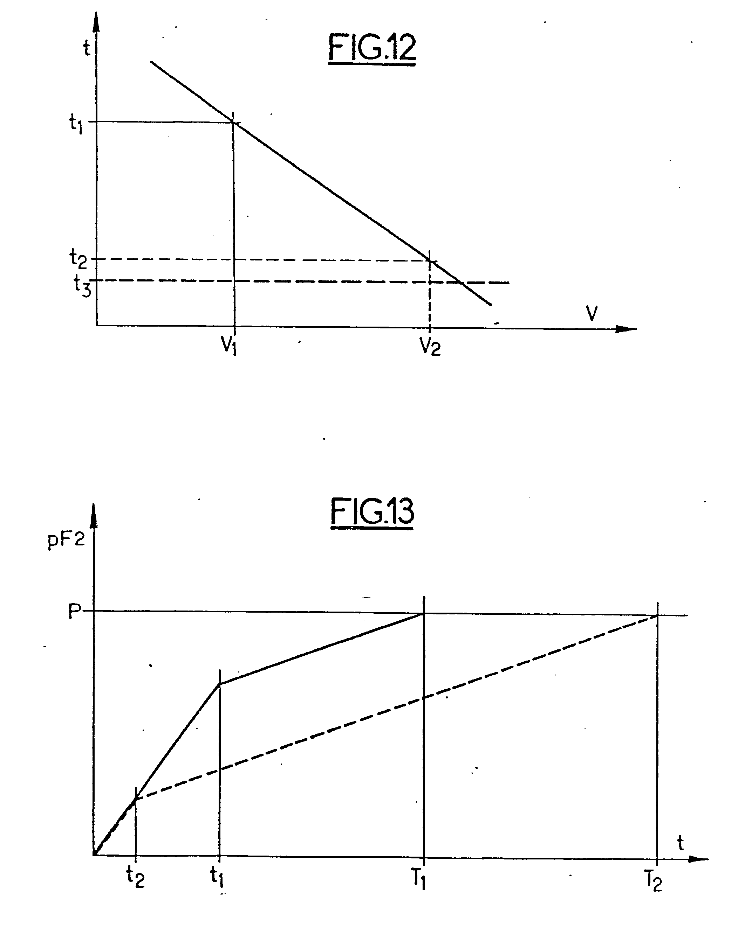

Les fig. 12 et 13 illustrent le choix de la durée de l'état transitoire pour le passage de troisième en deuxième vitesse. La courbe en trait plein représente la durée de l'état transitoire $t$ en fonction de la vitesse du véhicule V. La courbe en pointillés qui est ici une droite horizontale à titre d'exemple, fournit un temps t3 correspondant au cas du pied levé. Si le véhicule possède la vitesse V1 on voit que la durée de l'état transitoire définie par le dispositif électronique gouverneur 23 est t1. En se reportant à la fig. 13 qui représente l'évolution de la pression dans le frein F2 en fonction du temps (t), on voit que cette pression croît rapidement selon une droite représentée en trait plein jusqu'au temps t1. Cette croissance rapide correspond à l'état transitoire tel qu'il est représenté sur la fig. 8 c'est-à-dire à une alimentation rapide du frein F2 par le gicleur à grand passage 218 en même temps que par le gicleur 205. Après le temps t1, la configuration du circuit hydraulique est celle qui est représentée sur la fig. 7, la pression dans le frein F2 ne croissant plus que lentement jusqu'à atteindre la pression de remplissage P au temps T1.

Pour une vitesse V2 plus importante telle que représentée sur la fig. 12, on voit que la durée totale de l'état transitoire est plus faible et égale à t2. La courbe correspondante de la pression dans le frein F2 représentée sur la fig. 13 en tirets, montre que la durée t2 plus faible d'alimentation à grande vitesse du frein F2 entraîne un temps total d'alimentation T2 plus important que T1.

On obtient donc finalement, dans le cas où le conducteur a le pied sur l'accélérateur, un temps de passage de troisième en deuxième vitesse plus long lorsque la vitesse du véhicule est plus importante ce qui permet au moteur d'atteindre la vitesse de synchronisme et assure un passage sans à-coup d'un rapport à l'autre. Pour toutes les charges partielles du moteur d'entraînement jusqu'au pied à fond, on évolue sur la courbe de la fig. 12. On notera que cette courbe, qui est en fait une droite de pente négative, peut également être remplacée par approximation par un palier haut et un palier bas définissant seulement deux valeurs pour la durée de l'état de transition.

Dans le cas où le conducteur a le pied levé, le gouverneur 23 impose l'utilisation de la courbe en pointillés fournissant une durée de temporisation t3 faible de façon à assurer un temps de passage long permettant au véhicule d'amener le moteur à la vitesse de synchronisme.

Le passage de deuxième vitesse en première vitesse s'effectue de la manière suivante. Lorsque le gouverneur 23 de la fig. 2 donne l'ordre de passer en première vitesse, l'électro-aimant de l'électrovanne EL1 est désexcité. Les tiroirs de la vanne de passage VP1 viennent en butée sur la gauche comme représenté sur la fig. 6. Les chambres 45 et 46 de la vanne VP1 sont mises en communication et le canal 103 est mis à zéro par le canal 105 et les chambres 55 et 56 à la pression atmosphérique de la vanne de passage VP2. Un débit de fuite s'établit à travers les gicleurs en série 203 et 204 de sorte que la vanne de régulation de pression VRP établit la pression de ligne au niveau intermédiaire nécessaire pour la première vitesse. Le canal 103 étant au zéro, le canal 104 se met également à zéro ainsi que la chambre intermédiaire 65 de la vanne relais VS dont le tiroir 60 bascule vers la droite sous l'effet du ressort 70 et vient ainsi en contact avec le tiroir 50. Le canal 107 est également mis au zéro par le canal 106, les chambres 49 et 48 de la vanne de passage VP1 et le canal 103. De cette manière le frein F2 peut se vidanger dans les chambres 63 et 62 de la vanne relais VS et le canal 107. Lorsque le frein F2 est complètement vidangé, la transmission se trouve en configuration de première vitesse tel que représenté sur la fig. 6.

Le levier de vitesse permet en outre de placer la vanne manuelle VM dans une position référencée 1 dite de première imposée. Dans ce cas qui est représenté sur la fig. 11, on voit que la vanne manuelle VM met en communication les chambres 83, 82 et 81 et alimente ainsi par le canal 110 et le gicleur 214, les chambres 66 et 67 de la vanne relais VS qui, dans cette configuration, sont en communication, les deux tiroirs 50 et 60 étant en butée sur la droite. Le frein F1 est alors alimenté ce qui améliore la réaction sur le train épicycloïdal par rapport à la configuration de première vitesse ne position A où la réaction se faisait par la roue libre 14.

Bien que dans le mode de réalisation décrit à titre d'exemple on ait utilisé deux vannes de passage distinctes, on comprendra qu'il serait possible d'imaginer des configurations n'utilisant qu'une seule vanne de passage commandée par les deux électrovannes EL1 et EL2 pour obtenir les mêmes états du dispositif de commande. Par ailleurs, la définition de la durée de maintien de l'état transitoire en fonction de la vitesse du véhicule peut être faite par tout moyen approprié. On utilisera de préférence un dispositif électronique tel que celui qui fait l'objet de la demande de brevet européen 0 009.759 déposée conjointement et ayant pour titre « Dispositif de commutation séquentielle pour la commande d'une transmission automatique ».

## Revendications

1. Dispositif de commande d'une transmission automatique étagée a trois rapports de marche avant à passage sous couple, amorti par un convertisseur hydrocinétique de couple (1), et une marche arrière, du type comportant un train d'engrenages épicycloïdal (2) actionné par deux embrayages (E1, E2), et deux freins (F1, F2) à commande hydraulique, dispositif comprenant un distributeur hydraulique (22) piloté par deux électrovannes (EL1, EL2) afin d'alimenter sélectivement les deux embrayages et les deux freins selon des informations concernant la marche du véhicule équipé de la transmission, caractérisé par le fait que les moyens de commande des deux électrovannes (EL1, EL2) sont agencés de façon à utiliser, en plus de trois états différents des deux électrovannes pour une alimentation sélective correspondant respectivement à chacun des trois rapports de marche avant, un quatrième état possible pour la transition entre le troisième et le deuxième rapport de marche avant.

2. Dispositif de commande selon la revendication 1, caractérisé par le fait qu'il comprend deux vannes de passage (VP1, VP2) munies chacune d'un tiroir de distribution à deux positions.

3. Dispositif de commande selon les revendications 1 ou 2, caractérisé par le fait qu'il comporte en outre des moyens pour déterminer la durée du maintien du quatrième état transitoire en fonction de la vitesse du véhicule équipé de la transmission automatique et de la charge du moteur d'entraînement du véhicule.

4. Dispositif de commande selon l'une quelconque des revendications précédentes, comportant une vanne relais (VS) à deux tiroirs (50, 60) pouvant définir trois états selon leurs positions respectives, les sorties de la vanne relais étant reliées à l'un des embrayages (E2) et aux deux freins (F1, F2), caractérisé par le fait que les deux vannes de passage (VP1, VP2) sont reliées entre elles et aux entrées de la vanne relais (VS) de façon que dans le quatrième état transitoire des deux électrovannes, le remplissage du frein (F2) nécessaire pour l'établissement du deuxième rapport de marche avant se fasse à travers la vanne relais (VS) à grande vitesse par un conduit d'alimentation rapide muni d'une restriction (218) à grand passage et que dans un autre état des électrovannes correspondant au régime permanent du deuxième rapport de marche avant, le remplissage du frein précité (F2) se fasse à travers la vanne relais à faible vitesse par un conduit d'alimentation lente muni d'une restriction (205) à faible passage.

5. Dispositif de commande selon la revendication 4, caractérisé par le fait que le conduit d'alimentation rapide transmet la pression de ligne à la vanne relais (VS) à travers un gicleur à grand passage (218) par l'intermédiaire de la deuxième vanne de passage (VP2) dont l'électrovanne de commande (EL2) est en position désexcitée (ouverte) et à travers un gicleur (205) à petit passage directement à la vanne relais (VS), ladite électrovanne (EL2) en position excitée (fermée) plaçant la vanne de passage précitée (VP2) dans une position où cette dernière interrompt le passage du fluide dans le conduit d'alimentation rapide de sorte que la pression de ligne n'est plus transmise à la vanne relais que directement à travers le gicleur (205) à petit passage.

6. Dispositif de commande selon les revendications 4 ou 5, caractérisé par le fait que la vanne relais (VS) comprend deux tiroirs (50, 60) de distribution séparés par une chambre intermédiaire (65) et soumis à l'action d'un ressort de rappel (70) tendant à repousser les deux tiroirs dans un sens avec une force légèrement supérieure au frottement des tiroirs dans le corps de la vanne.

7. Dispositif de commande selon la revendication 6, caractérisé par le fait que la vanne relais (VS) comprend une chambre d'extrémité (61) en communication avec l'embrayage (E2) nécessaire pour le troisième rapport de marche avant et susceptible de provoquer le déplacement de l'un des tiroirs à l'encontre de la pression régnant dans la chambre intermédiaire (65) depuis une position où le frein (F2) nécessaire pour le deuxième rapport de marche avant est alimenté par l'intermédiaire de la vanne relais (VS) jusqu'à une position où ledit frein (F2) n'est pas alimenté.

8. Dispositif de commande selon la revendication 7, caractérisé par le fait que la pression dans la chambre intermédiaire (65) de la vanne relais (VS) est une pression de consigne égale, lorsque les deux électrovannes (EL1, EL2) pilotant les deux vannes de passage (VP1, VP2) sont désexcitées (ouvertes), à une pression intermédiaire régnant entre deux restrictions en série (206, 207) disposées dans un conduit à la pression de ligne.

9. Dispositif de commande selon l'une quelconque des revendications 6 à 8, caractérisé par le fait que l'alimentation du frein (F1) nécessaire pour le rapport de marche arrière se fait à travers la vanne relais (VS) lorsque les deux tiroirs (50, 60) de cette dernière ont été repoussés à l'encontre du ressort de rappel (70) précité sous l'action de la pression régnant dans la chambre d'extrémité (61) en communication avec l'embrayage (E2) également nécessaire pour le rapport de marche arrière, une restriction (219) étant disposée entre ledit embrayage (E2) et ladite chambre afin que, dans cette position de la vanne relais, le frein précité (F1) soit rempli avant l'embrayage (E2).

10. Dispositif de commande selon l'une quelconque des revendications précédentes, caractérisé par le fait qu'il comprend en outre une vanne de régulation de pression (VRP) définissant pour le fluide hydraulique alimentant le dispositif de commande un premier niveau de pression haut pour la marche arrière et la position neutre, un deuxième niveau de pression intermédiaire défini entre deux restrictions en série (203, 204) pour le premier rapport de marche avant et un troisième niveau de pression bas pour les deuxième et troisième rapports de marche avant.

11. Dispositif de commande selon l'une quelconque des revendications précédentes, caractérisé par le fait qu'il comprend en outre une vanne manuelle (VM) permettant l'alimentation du dispositif en fluide hydraulique et l'alimentation directe de l'embrayage (E1) nécessaire pour les différents rapports de marche avant.

12. Dispositif de commande selon l'une quelconque des revendications précédentes, caractérisé par le fait qu'il comprend en outre une vanne de limitation de pression (VLP) alimentant en outre un fluide hydraulique le convertisseur (1) de la boîte de vitesses et le circuit de lubrification de la transmission.

13. Dispositif de commande selon les revendications 4 à 11 prises dans leur ensemble, caractérisé par le fait que les différents organes du dispositif sont agencés de telle sorte que lorsque l'électrovanne de commande (EL1) de la première vanne de passage (VP1) est ouverte, l'électrovanne (EL2) de commande de la deuxième vanne de passage (VP2) étant fermée, la vanne relais (VS) ne peut être alimentée en fluide hydraulique que par la vanne manuelle (VM) de sorte que lorsque cette dernière n'alimente pas non plus la vanne relais (VS), l'embrayage (E2) nécessaire pour le rapport de marche arrière et le troisième rapport de marche avant, le frein (F1) nécessaire pour le rapport de marche arrière et le frein (F2) nécessaire pour le deuxième rapport de marche avant sont vidangés et les tiroirs (50, 60) de la vanne relais (VS) sont repoussés par le ressort de rappel (70).

14. Dispositif de commande selon les revendications 4 à 11 prises dans leur ensemble, caractérisé par le fait que les différents organes du dispositif sont agencés de telle sorte que lorsque l'électrovanne (EL1) commandant la première vanne de passage (VP1) est ouverte et que l'électrovanne (EL2) commandant la deuxième vanne de passage (VP2) est fermée, la vanne manuelle (VM) étant placée de façon à alimenter l'embrayage (E1) nécessaire pour l'ensemble des rapports de marche avant, les deux vannes de passage (VP1, VP2) laissent passer un débit de fuite en aval de deux restrictions (203, 204) qui permettent à là vanne de régulation de pression (VRP) d'établir ainsi la pression de ligne au niveau intermédiaire.

15. Dispositif de commande selon les revendications 4 à 11 prises dans leur ensemble, caractérisé par le fait que lorsque les deux électrovannes (EL1, EL2) commandant les deux vannes de passage (VP1, VP2) sont fermées, la vanne manuelle (VM) étant placée de façon à alimenter l'embrayage (E1) nécessaire pour les rapports de marche avant, le fluide hydraulique à la pression de ligne, établie par la vanne de régulation de pression (VRP) au niveau bas, alimente la chambre intermédiaire (65) de la vanne relais (VS) et le frein (F2) nécessaire pour le deuxième rapport de marche avant par l'intermédiaire de la vanne relais (VS).

16. Dispositif de commande selon les revendications 4 à 11 prises dans leur ensemble, caractérisé par le fait que les différents éléments du dispositif sont agencés de telle sorte que lorsque les deux électrovannes de commande (EL1, EL2) de deux vannes de passage (VP1, VP2) sont ouvertes, la vanne manuelle (VM) étant placée de façon à alimenter l'embrayage (E1) nécessaire pour l'ensemble des rapports de marche avant, la première vanne de passage (VP1) laisse passer un débit de fuite en aval de deux restrictions en série (206, 207) définissant une pression de consigne inférieure à la pression de ligne, la chambre intermédiaire (65) de la vanne relais (VS) est alimentée à cette pression de consigne, l'embrayage (E2) nécessaire pour le troisième rapport de marche avant est alimenté à la pression de ligne à travers une restriction par l'intermédiaire des deux vannes de passage (VP1, VP2) et la chambre d'extrémité (61) de la vanne relais (VS) est soumise à la pression régnant dans l'embrayage précité (E2) au fur et à mesure de son remplissage.

17. Procédé de commande d'une transmission automatique étagée à trois rapports de marche avant à passage sous couple pour véhicule automobile, comportant une boîte de vitesses susceptible de définir un deuxième rapport de marche avant lorsqu'un frein à commande hydraulique (F2) est serré et un troisième rapport de marche avant lorsque ledit frein est desserré, caractérisé par le fait que :

a) lorsque le conducteur a le pied sur la pédale d'accélérateur, le passage du troisième au deuxième rapport se fait tout d'abord par un état transitoire pendant lequel le frein (F2) est alimenté à grande vitesse, la durée de cet état transitoire étant inversement proportionnelle à la vitesse du véhicule, puis par un état permanent correspondant au deuxième rapport de marche avant pendant lequel le frein (F2) est alimenté à faible vitesse ;

b) lorsque le conducteur a le pied levé, le passage du troisième au deuxième rapport se fait tout d'abord par un état transitoire pendant lequel le frein (F2) est alimenté à grande vitesse, la durée de cet état étant faible, puis par un état permanent correspondant au deuxième rapport de marche avant pendant lequel le frein (F2) est alimenté à faible vitesse.

**Claims**

1. Device for controlling a stepwise automatic transmission with three forward drive ratios with changeover under torque, damped by a hydrokinetic torque converter (1), and one reverse drive, of the type comprising a train of epicyclic gears (2) operated by two clutches (E1, E2) and two brakes (F1, F2) hydraulically controlled, which device comprises a hydraulic selector unit (22) controlled by two electrically operated valves (EL1, EL2) so as to selectively feed the two clutches and the two brakes on the basis of information relating to the operation of the vehicle fitted with the transmission, characterized in that the means of controlling the electric valves (EL1, EL2) are so arranged as to use, in addition to the three different states of the two electric valves for a selective feed corresponding respectively to each of the three forward drive ratios, a fourth possible state for the transition between the third and second forward drive ratios.

2. The control device according to claim 1, characterized in that it comprises two changeover valves (VP1, VP2) each fitted with a two-position slide selector valve.

3. The control device according to claims 1 or 2, characterized in that it also comprises means for determining the duration during which the fourth transitional state is maintained in accordance with the speed of the vehicle fitted with the automatic transmission and with the load on the vehicle drive engine.

4. The control device according to any of the previous claims, comprising a relay valve (VS) with two spools (50, 60) capable of defining three states in accordance with their respective positions, with the relay valve outlets being connected to one of the clutches (E2) and to the two brakes (F1, F2) characterized in that the two changeover valves (VP1, VP2) are connected together and to the inlets of the relay valve (VS) in such a manner that, in the fourth transitional state of the two electric valves, the filling of the brake (F2) needed to set upt the second forward drive ratio occurs through the relay valve (VS) at high speed via a fast feed line fitted with a high-flow restricting orifice (218) and in that in another state of the electric valves corresponding to the constant operating regime of the second forward drive ratio, the filling of the above-mentioned brake (F2) occurs through the relay valve (VS) at low speed via a slow feed line fitted with a low-flow restricting orifice (205).

5. The control device according to claim 4, characterized in that the fast feed line transmits the line pressure to the relay valve (VS) through a high-flow nozzle (218) via the second changeover valve (VP2) whose controlling electric valve (EL2) is in the de-energized (open) position and through a low-flow nozzle (205) directly into the relay valve (VS) ; the said electric valve (EL2) in the energized (closed) position places the above-mentioned changeover valve (VP2) in such a position that the latter cuts off the flow of fluid in the fast feed line so that the line pressure is only transmitted to the relay valve directly through the low-flow nozzle (205).

6. The control device according to claims 4 or 5, characterized in that the relay valve (VS) comprises two selectior slides (50, 60) separated by an intermediate chamber (65) and acted on by a return spring (79) tending to push the two slides in one direction with a force that slightly exceeds the friction of the slides insides the valve body.

7. The control device according to claim 6, characterized in that the relay valve (VS) comprises an end chamber (61) connecting with the clutch (E2) required for the third foward drive ratio and capable of causing one of the slides to move against the pressure within the intermediate chamber (65) from a position in which the brake (F2) required for the second forward drive ratio is fed by the relay valve (VS) up to a position in which the said brake (F2) is not fed.

8. The control device according to claim 7, characterized in that the pressure in the intermediate chamber (65) of the relay valve (VS) is a setpoint pressure which is equal, when the two electric valves (EL1, EL2) controlling the two changeover valves (VP1, VP2) are de-energized (open), to an intermediate pressure existing between two restricting orifices placed in series (206, 207) in a duct at line pressure.

9. The control device according to any of claims 6 to 8, characterized in that the feed to brake (F1) required for the reverse drive is provided via the relay valve (VS) when the latter's two slides (50, 60) have been pushed against the above-mentioned return spring (70) under the action of the pressure within the end chamber (61) connecting with the clutch (E2) which is also required for the reverse drive ratio, there being a restricting orifice 219) placed between the said clutch (E2) and the said chamber so that, in this relay valve position, the above-mentioned brake (F1) is filled before the clutch (E2).

10. The control device according to any of the preceding claims, characterized in that it also comprises a pressure regulating valve (VRP) defining, for the hydraulic fluid feeding the control device, a first high pressure level for the reverse drive and neutral position, a second intermediate pressure level defined between two restricting orifices (203, 204) in series for the first forward drive and a third low pressure level for the second and third forward drive ratios.

11. The control device according to any of the previous claims, characterized in that it also comprises a manual valve (VM) providing for the hydraulic fluid feed to the device and the direct feed to the clutch (E1) required for the various forward drive ratios.

12. Control device according to any of the preceding claims, characterized in that it also comprises a pressure limiting valve (VLP) also feeding hydraulic fluid to the gearbox converter (1) and to the transmission lubrication circuit.

13. The control device according to any of claims 4 to 11 taken together, characterized in that the various components of the device are so arranged that when the electric valve (EL1) controlling the first changeover valve (VP) is open, the electric valve (EL2) controlling the second changeover valve (VP2) being closed, the relay valve (VS) can only be fed with hydraulic fluid via the manual valve (VM), so that when this latter does not relay valve (VS) either, the clutch (E2) required for the reverse drive ratio and for the third forward drive ratio, the brake (F1) required for the reverse drive ratio and the brake (F2) required for the second forward drive ratio are drained and the slides (50, 60) of the relay valve (VS) are pushed back by the return spring (70).

14. The control device according to claims 4 to 11 taken together, characterized in that the various components of the device are so arranged that when the electric valve (EL1) controlling the first changeover valve (VP1) is open and the electric valve (EL2) controlling the second changeover valve (VP2) is closed, the manual valve (VM) being positioned so as to feed the clutch (EL1) required for all the forward drive ratios, the two changeover valves (VP1, VP2) permit fluid to leak downstream of two restricting orifices (203, 204) which enable the pressure control valve (VRP) to thus establish the line pressure at an intermediate level.

15. The control device according to claims 4 to 11 taken together, characterized in that when the two electric valves (EL1, EL2) controlling the two changeover valves (VP1, VP2) are closed, the manual valve (VM) being positioned so as to feed the clutch (EL1) required for the forward drive ratios, the hydraulic fluid, at the line pressure established by the pressure control valve (VRP) at the low level, feeds the intermediate chamber (65) of the relay valve (VS) and the brake (F2) required for the second forward drive ratio, via the relay valve (VS).

16. The control valve according to claims 4 to 11 taken together, characterized in that the various elements of the device are so arranged that when the two electric valves (EL1, EL2) controlling the two changeover valves (VP1, VP2) are opened, the manual valve (VM) being positioned so as to feed the clutch (E1) required for all the forward drive ratios, the first changeover valve (VP1) allows fluid to leak downstream of two restricting orifices (206, 207) in series defining a setpoint pressure lower than the line pressure, the intermediate chamber (65) of the relay valve (VS) is fed at this setpoint pressure, the clutch (E2) required for the third forward drive ratio is fed at the line pressure through a restricting orifice (220) via the two changeover valves (VP1, VP2) and the end chamber (61) of the relay valve (VS) is subjected to the pressure within the above-mentioned clutch (E2) as it fills up.

17. Method of controlling a stepwise automatic transmission with three forward drive ratios with changeover under torque for an automotive vehicle, comprising a gearbox capable of defining a second forward drive ratio when a hydraulically controlled brake (F2) is applied and a third forward drive ratio when the said brake is released, characterized in that :

a) when the driver has his foot on the accelerator pedal the changeover from the third to the second ratio is performed first of all by a transitional state in which the brake (F2) is fed at a high rate, the duration of this transitional state being inversely proportional to the speed of the vehicle, and then by a permanent state corresponding to the second forward drive ratio during which the brake (F2) is fed at a low rate ;

b) when the driver has his foot raised the changeover from third to second ratio is performed first of all by a transitional state during which the brake (F2) is fed at a high rate, the duration of this state being short, and then by a permanent state corresponding to the second forward drive ratio during which the brake (F2) is fed at a low rate.

### Ansprüche

1. Steuervorrichtung für ein automatisches Getriebe mit drei Vorwärtsgängen mit Schaltung unter Drehmoment, mit Dämpfung durch einen hydrokinetischen Drehmomentwandler (1), und einem Rückwärtsgang von Typ mit Epizykloidal-Zahnradgetriebe (2), das von zwei Kupplungen (E1, E2) und zwei hydraulisch gesteuerten Bremsen (F1, F2) betätigt wird, wobei die Vorrichtung einen von zwei Magnetventilen (EL1, EL2) gesteuerten Steuerventil (22) umfasst zwecks selektiver Speisung der beiden Kupplungen und der beiden Bremsen gemäss den Informationen über die Geschwindigkeit des Fahrzeugs, das mit dem Getriebe ausgerüstet ist, dadurch gekennzeichnet, dass die Steuermittel der beiden Magnetventile (EL1, EL2) so angeordnet sind, dass sie zuzätzlich zu den drei unterschiedlichen Zuständen der beiden Magnetventile zur selektiven Speisung entsprechend jedem der drei Vorwärtsgänge einen vierten möglichen Getriebezustand für den Übergang zwischen dem dritten und dem zweiten Vorwärtsgang benützen.

2. Vorrichtung gemäss Anspruch 1, dadurch gekennzeichnet, dass sie zwei Schaltventile (VP1, VP2) enthält, die jeweils mit einem Steuerschieber mit je zwei Stellungen ausgerüstet sind.

3. Vorrichtung gemäss Anspruch 1 oder 2, dadurch gekennzeichnet, dass sie ferner Mittel zur Bestimmung der Dauer des vierten Übergangszustands in Abhängigkeit von der Geschwindigkeit des mit dem automatischen Getriebe ausgerüsteten Fahrzeugs und von der Belastung des Antriebsmotors des Fahrzeugs enthält.

4. Vorrichtung gemäss einem beliebigen der obigen Ansprüche, mit einem Relaisventil (VS) mit zwei Schiebern (56, 66), das je nach deren Stellung drei Zustände annehmen kann wobei die Ausgänge des Relaisventils mit einer der Kupplungen (E2) und mit den zwei Bremsen (F1, F2) verbunden sind, dadurch gekennzeichnet, dass die beiden Schaltventile (VP1, VP2) miteinander und mit den Eingängen des Relaisventils (VS) verbunden sind, so dass im vierten Übergangszustand der beiden Magnetventile das Füllen der Bremse (F2) das für das Einrücken des zweiten Vorwärtsgangs erforderlich ist, durch das Relaisventil (VS) über eine Schnellspeiseleitung mit einer Drosselung 218) mit grossem Durchsatz sehr schnell erfolgt und dass in einem anderen Zustand der Magnetventile, der dem Dauerzustand des zweiten Vorwärtsgangs entspricht, das Füllen der obigen Bremse (F2) durch das Relaisventil über eine Langsamspeiseleitung mit einer Drosselung (205) mit kleinem Durchsatz langsam erfolgt.

5. Vorrichtung gemäss Anspruch 4, dadurch gekennzeichnet, dass die Schnellspeiseleitung den Druck der Leitung zum Relaisventil (VS) durch eine Düse mit grossem Durchsatz (218) über das zweite Schaltventil (VP2), dessen Steuermagnetventil (EL2) im entregten Zustand (offen) ist, und durch eine Düse (205) mit kleinem Durchsatz direkt zum Relaisventil (VS) übertragt, wobei dieses Magnetventil (EL2) im erregten Zustand (geschlossen) ist und das obige Schaltventil (VP2) in eine Stellung bringt, in der dieses letztere den Durchgang der Flüssigkeit in die Schnellspeiseleitung unterbricht, so dass der Leitungsdruck dann nur direkt durch die Düse (205) mit kleinem Durchsatz auf das Relaisventil übertragen wird.

6. Vorrichtung gemäss Anspruch 4 oder 5, dadurch gekennzeichnet, dass das Relaisventil (VS) zwei Steuerschieber (50, 60) enthält, die durch eine Zwischenkammer (65) getrennt sind und mit der Kraft einer Rückstellfeder (79) beaufschlagt sind, die die beiden Schieber in einer Richtung mit einer Kraft zurückdrückt, die etwas grösser ist als die Reibung der Schieber im Ventilgehäuse.

7. Vorrichtung gemäss Anspruch 6, dadurch gekennzeichnet, dass das Relaisventil (VS) eine Aussenkammer (61) in Verbindung mit der Kupplung (E2) umfasst, die für den dritten Vorwärtsgang erforderlich ist und bei Beaufschlagung mit dem Druck in der Zwischenkammer (65) die Verschiebung eines der Schieber aus einer Stellung, in der die für den zweiten Vorwärtsgang erforderliche Bremse (F2) über das Relaisventil (VS) gespeist wird, in eine Stellung, in der diese Bremse nicht gespeist wird, bewirkt.

8. Vorrichtung gemäss Anspruch 7, dadurch gekennzeichnet, dass der Druck in der Zwischenkammer (65) des Relaisventils (VS) ein Einstelldruck ist, der, wenn die beiden Magnetventile (EL1, EL2), die die beiden Schaltventile (VP1, VP2) steuern, entregt (offen) sind, gleich einem Zwischendruck ist, der zwischen zwei Drosselungen (206, 207) herrscht, die in Reihe in einer Leitung unter Leitungsdruck angeordnet sind.

9. Vorrichtung gemäss einem beliebigen der Ansprüche 6 bis 8, dadurch gekennzeichnet, dass die Speisung der Bremse (F1), die für den Rückwärtsgang erforderlich wird, über das Relaisventil (VS) erfolgt wenn die beiden Schieber (50, 60) dieses letzteren entgegen der Federkraft der vorgenannten Rückstellfeder (70) unter der Einwirkung des Drucks in der äusseren Kammer (61) in Verbindung mit der Kupplung (E2), die ebenfalls für den Rückwärtsgang erforderlich ist, erfolgt, wobei zwischen der genannten Kupplung (E2) und der gennanten Kammer eine Drosselung (219) angeordnet ist, damit in dieser Stellung des Relaisventils die genannte Bremse (F1) vor der Kupplung (E2) gefüllt wird.

10. Vorrichtung gemäss einem beliebigen der vorhergehenden Ansprüche, dadurch gekennzeichnet, dass sie ferner ein Druckregelventil (VRP) enthält, das für die hydraulische Flüssigkeit, die die Vorrichtung speist, eine erste obere Druckhöhe für den Rückwärtsgang und den Leerlauf, eine zweite mittlere Druckhöhe, die zwischen zwei in Reihe liegenden Drosselungen (203, 204) definiert ist, für den ersten Vorwärtsgang, und eine dritte niedrige Druckhöhe für den zweiten und dritten Vorwärtsgang festlegt.

11. Vorrichtung gemäss einem beliebigen der vorhergenden Ansprüche, dadurch gekennzeichnet, dass sie ferner ein Handventil (VM) enthält, das die Speisung der Vorrichtung mit Hydraulikflüssigkeit und die Direktspeisung der Kupplung (E1), die für die verschiedenen Vorwärtsgänge erforderlich ist, ermöglicht.

12. Vorrichtung gemäss einem beliebigen der vorhergehenden Ansprüche, dadurch gekennzeichnet, dass es ferner ein Druckbegrenzungsventil (VLP) enthält, das den Schaltgetriebewandler (1) und die Getriebeschmierölanlage mit Hydraulikflüssigkeit speist.

13. Vorrichtung gemäss den Ansprüchen 4 bis 11 in ihrer Gesamtheit, dadurch gekennzeichnet, dass die verschiedenen Bauteile der Vorrichtung so angeordnet sind, dass, wenn das Steuermagnetventil (EL1) des ersten Schaltventils (VP1) offen ist und das Steuermagnetventil (EL2) des zweiten Schaltventils (VP2) geschlossen ist, das Relaisventil (VS) nur über das Handventil (VM) mit Hydraulikflüssigkeit gespeist werden kann, so dass, wenn dieses letztere das Relaisventil (VS) auch nicht speist, die für den Rückwärtsgang und für den dritten Vorwärtsgang erforderliche Kupplung (E2), die für den Rückwärtsgang erforderliche Bremse (F1) und die für den zweiten Vorwärtsgang erforderliche Bremse (F2) geleert werden, und die Schieber (50, 60) des Relaisventils (VS) von der Rückstellfeder (70) zurückgedrückt werden.

14. Vorrichtung gemäss den Ansprüchen 4 bis 11 in ihrer Gesamtheit, dadurch gekennzeichnet, dass die verschiedenen Bauteile der Vorrichtung so angeordnet sind, dass, wenn das Magnetventil (EL1), das das erste Schieberventil (VP1) steuert, offen ist und das Magnetventil (EL2), das das zweite Schieberventil (VP2) steuert, geschlossen ist, und das Handventil (VM) so steht, dass es die für alle Vorwärtsgänge erforderliche Kupplung (E1) speist, die beiden Schieberventile (VP1, VP2) eine Leckageströmung hinter den beiden Drosselungen (203, 204) durchlassen, die es dem Druckregelventil (VPR) ermöglicht, den Leitungsdruck auf die mittlere Höhe einzustellen.

15. Vorrichtung gemäss den Ansprüchen 4 bis 11 in ihrer Gesamtheit, dadurch gekennzeichnet, dass, wenn die beiden Magnetventile (EL1, EL2), die die beiden Schieberventile (VP1, VP2) steuern, geschlossen sind, und das Handsteuerventil (VM) so steht, dass die für die Vorwärtsgänge erforderliche Kupplung (E1) gespeist wird, die Hydraulikflüssigkeit die unter Leitungsdruck steht, der vom Druckregelventil (VRP) auf die untere Druckhöhe eingeregelt wird, die Zwischenkammer (65) des Relaisventils (VS) und über das Relaisventil (VS) die für den zweiten Vorwärtsgang erforderliche Bremse (F2) speist.

16. Vorrichtung gemäss den Ansprüchen 4 bis 11 in ihrer Gesamtheit, dadurch gekennzeichnet, dass die verschiedenen Bauteile der Vorrichtung so angeordnet sind, dass, wenn die beiden Steuermagnetventile (EL1, EL2) der beiden Schieberventile (VP1, VP2) offen sind und das Handventil (VM) so steht, dass es die für alle Vorwärtsgänge erforderliche Kupplung (E1) speist, das erste Schieberventil (VP1) eine Leckageströmung hinter den beiden in Reihe liegenden Drosselungen (206, 207) durchlässt und damit einen niedrigeren Solldruck als den Leitungsdruck definiert, die Zwischenkammer (65) des Relaisventils (VS) mit diesem Solldruck gespeist wird, die für den dritten Vorwärtsgang erforderliche Kupplung (E2) durch eine Drosselung (220) über die beiden Schieberventile (VP1, VP2) mit dem Leitungsdruck gespeist wird und die äussere Kammer (61) des Relaisventils (VS) mit dem Druck in der genannten Kupplung (E2) entsprechend ihrem Füllzustand beaufschlagt wird.

17. Verfahren zur Steuerung einer automatischen Kupplung mit drei Vorwärtsgängen mit Schaltung unter Drehmoment für Kraftfahrzeuge, mit einem Getriebe, das einen zweiten Vorwärtsgang wenn eine hydraulisch betätigte Bremse (F2) angezogen ist, und einen dritten Vorwärtsgang wenn diese Bremse gelöst ist, definieren kann, dadurch gekennzeichnet, dass :

a) wenn der Fahrer den Fuss auf dem Gaspedal hat, der Übergang vom dritten zum zweiten Gang zuerst über einen Übergangszustand während dessen die Bremse (F2) schnell gespeist wird, wobei die Dauer dieses Zustands umgekehrt proportional der Geschwindigkeit des Fahrzeugs ist, dann durch einen Dauerzustand im zweiten Vorwärtsgang während dessen die Bremse (F2) langsam gespeist wird, bewirkt wird ;

b) wenn der Fahrer den Fuss vom Gaspedal nimmt, erfolgt der Übergang vom dritten zum zweiten Gang zuerst durch einen Übergangszustand, während dessen die Bremse (F2) schnell gespeist wird, wobei die Dauer dieses Zustands nur kurz ist, dann durch einen Dauerzustand, der dem zweiten Vorwärtsgang entspricht, während dessen die Bremse (F2) langsam gespeist wird.

# FIG.1

# FIG.2

## FIG.3

| | ETATS PERMANENTS | | | | | | | | | ETATS TRANSITOIRES | |
|---|---|---|---|---|---|---|---|---|---|---|---|
| LEVIER SELECTION | P | R | N | A | | | 2 | | 1 | A | |
| RAPPORT ENGAGE | O | AR | O | 1 | 2 | 3 | 1 | 2 | 1 | 2/3 | 3\2 |
| $EL_1$ | O | O | O | O | L | O | O | L | O | L | L |
| $EL_2$ | L | L | L | L | L | O | L | L | L | O | O |
| $E_1$ | O | O | O | L | L | L | L | L | L | L | L |
| $E_2$ | O | L | O | O | O | L | O | O | O | O | O |
| $F_1$ | O | L | O | O | O | O | O | O | L | O | O |
| $F_2$ | O | O | O | O | L | O | O | L | O | L | O→L |

**0 009 758**

FIG.4
POINT MORT

FIG.5
MARCHE ARRIERE

0 009 758

**0 009 758**

FIG.6

1ère VITESSE

**0 009 758**

FIG.7

2ème VITESSE

0 009 758

FIG.8
2ème 3ème et 3ème 2ème
TRANSITOIRE

**0 009 758**

FIG.9

2eme 3eme

**0 009 758**

FIG.10
3ème VITESSE

**FIG.11**
**1ère IMPOSEE**

0 009 758

FIG.12

FIG.13